(19) Europäisches Patentamt
European Patent Office
Office européen des brevets

(11) **EP 3 871 331 B1**

(12) **EUROPÄISCHE PATENTSCHRIFT**

(45) Veröffentlichungstag und Bekanntmachung des Hinweises auf die Patenterteilung:
**18.02.2026 Patentblatt 2026/08**

(21) Anmeldenummer: **19794498.6**

(22) Anmeldetag: **23.10.2019**

(51) Internationale Patentklassifikation (IPC):
*H02P 21/04* (2006.01)   *H02P 21/14* (2016.01)
*H02P 6/185* (2016.01)

(52) Gemeinsame Patentklassifikation (CPC):
**H02P 21/14; H02P 6/185; H02P 21/04**

(86) Internationale Anmeldenummer:
**PCT/EP2019/078879**

(87) Internationale Veröffentlichungsnummer:
**WO 2020/083985 (30.04.2020 Gazette 2020/18)**

(54) **VERFAHREN UND VORRICHTUNG ZUR LASTFREIEN BESTIMMUNG LASTABHÄNGIGER LAGEZUORDNUNGSPARAMETER EINER SYNCHRONMASCHINE OHNE LAGEGEBER**

METHOD AND DEVICE FOR LOAD-FREE DETERMINING OF LOAD-DEPENDENT POSITIONING PARAMETERS OF A SYNCHRONOUS MACHINE WITHOUT A POSITION SENSOR

PROCÉDÉ ET DISPOSITIF POUR LA DÉTERMINATION SANS CHARGE DE PARAMÈTRES D'AFFECTATION DE POSITION EN FONCTION DE LA CHARGE D'UNE MACHINE SYNCHRONE SANS CAPTEUR DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2018 DE 102018008384**
**05.11.2018 DE 102018008689**

(43) Veröffentlichungstag der Anmeldung:
**01.09.2021 Patentblatt 2021/35**

(73) Patentinhaber: **KOSTAL Drives Technology GmbH**
**58513 Lüdenscheid (DE)**

(72) Erfinder:
• LANDSMANN, Peter
  80809 München (DE)
• PAULUS, Dirk
  81669 München (DE)
• KÜHL, Sascha
  81671 München (DE)

(74) Vertreter: **Leopold Kostal GmbH & Co. KG**
**An der Bellmerei 10**
**58513 Lüdenscheid (DE)**

(56) Entgegenhaltungen:
**US-A1- 2018 131 305**

• **CHEN LEI ET AL: "Impact of bridge-saturation on anisotropy-based initial rotor polarity detection of interior permanent-magnet synchronous machines", 2016 19TH INTERNATIONAL CONFERENCE ON ELECTRICAL MACHINES AND SYSTEMS (ICEMS), THE INSTITUTE OF ELECTRICAL ENGINEERS OF JAPAN, 13 November 2016 (2016-11-13), pages 1 - 6, XP033054070**

**Beschreibung**

**1 Stand der Technik**

Verfahren, die eine effiziente Regelung einer Synchronmaschine ohne Lagegeber ermöglichen (häufig als "geberlose" oder "sensorlose" Regelung bezeichnet) werden in 2 Klassen unterteilt:

1. Grundwellenverfahren [1] [2] [3] werten die unter Bewegung induzierte Spannung aus, liefern bei mittleren und hohen Drehzahlen sehr gute Signal-Eigenschaften, aber versagen im unteren Drehzahlbereich, insbesondere bei Stillstand. Für den Betrieb unter Last (Sättigung) benötigen Grundwellenverfahren eine Strom-abhängige Parametrierung der Induktivität [4] [5].
2. Anisotropie-basierte Verfahren [6] [7] [8] werten die Lageabhängigkeit der Induktivität der Maschine aus, wozu keine Drehzahl notwendig ist, aber weisen mehrere Probleme und Hürden auf, die erklären, warum viele Anwendungen bis heute einen Lagegeber (mit seinen Nachteilen) benötigen. Für den Betrieb unter Last (Sättigung) erfordern Anisotropie-basierte Verfahren eine Strom-abhängige Parametrierung der Anisotropie-Verschiebung [9] [10] [11] [12].

Geberlose Regelung von Synchronmaschinen im gesamten Drehzahlbereich wird durch eine Kombination von Verfahren beider Klassen umgesetzt [8] [13].

Zur Bestimmung des stromabhängigen Verlaufs von Induktivität und Anisotropieverschiebung können magnetische Simulationsdaten herangezogen werden [14] [15], welche Abweichungen zur Realität aufweisen und den Zugriff auf das Maschinendesign erfordern. Oder es können diese Verläufe an einem Prüfstandsaufbau mit Lastmaschine und Lagegeber gemessen werden [16] [17], was aber in der Praxis zu aufwendig bis unmöglich sein kann, wenn eine unbekannte Synchronmaschine im Feld angeschlossen werden soll.

Für den Anschluss einer unbekannten Synchronmaschine gibt es Ansätze zur initialen Parameter-Identifikation mit Vernachlässigung der Stromabhängigkeit [18] [19], welche im Betrieb unter erhöhter Last ungenau/instabil werden. Andere Ansätze identifizieren zusätzlich mittels kurzzeitiger makroskopischer Anregung [20] [21] [22] die Lastabhängigkeit, was jedoch zwangsläufig mit Drehmomentspitzen einhergeht, die nicht in jeder Anwendung akzeptabel sind und zudem bei nicht blockiertem Rotor die Ergebnisse der Identifikation verfälschen.

Die Veränderung der Induktivität (bei Stromänderung) kann alternativ über Online-Identifikationsverfahren nachgeführt werden [23] [24] [25] [26], welche jedoch prinzipbedingt einen zeitlichen Verzug aufweisen (Faktor 10-1000 langsamer als die tatsächliche Änderung) und damit nur im stationären Zustand genau/stabil sind.

Für die Anisotropie-Verschiebung existieren ebenfalls Ansätze zur Identifikation [27] [28] im Betrieb, welche jedoch ein korrekt (nichtlinear) parametriertes Grundwellenmodell erfordern und erst dann gute Ergebnisse liefern, wenn über eine ausreichende Zeitdauer Betriebspunkte in einem bestimmten Drehzahlbereich mit möglichst verschiedenen Drehmomentwerten durchlaufen wurden, was nicht in allen Anwendungen vorausgesetzt werden kann.

Die Veröffentlichung "Impact of bridge-saturation on anisotropy-based initial rotor polarity detection of interior permanent-magnet synchronous machines" von Chen Lei et al., 2016 19th International Conference on Electrical Machines and Systems (ICEMS), The Institute of Electrical Engineers of Japan, 13. November 2016, Seiten 1-6, XP033054070 zeigt ein Verfahren zur Anisotropie-basierten Bestimmung der Rotor-Polarität bei Synchronmaschinen mit Permanentmagneten. Da Anisotropie-basierte Verfahren auf 180° elektrisch periodisch und somit zweideutig innerhalb einer vollen elektrischen Umdrehung sind, bedürfen sie bei jedem Aufstartvorgang einer einmaligen zusätzlichen Polaritätsprüfung. Diese Veröffentlichung zeigt, dass bei bestimmten Maschinentypen die größere Stromantwort nicht, wie bis dahin angenommen, in positiver d-Richtung sondern tatsächlich in negativer d-Richtung auftritt. Diese Polaritätsprüfung hat als Ergebniswert also eine binäre Größe "positiv oder negativ", welche das Vorzeichen der d-Achse betrifft. Diese binäre Größe ist im späteren geberlos-Betrieb nicht weiter nutzbar und bietet dann auch keine Informationen bezüglich der Sättigungs-bedingten Zuordnung von Fluss zu Rotorlage oder von Anisotropie zu Rotorlage.

**2 Grundlagen**

Die Erfindung ist in Verfahrensanspruch 1 und Vorrichtungsanspruch 20 definiert. Bevorzugte Ausführungsformen sind in den abhängigen Ansprüchen definiert.

Es folgt eine allgemeine Erläuterung, auch betreffend fakultative Ausgestaltungen der Erfindung. Dabei zeigen:

Fig. 1    Rotorquerschnitte mit Oberflächen-montierten (links) und mit vergrabenen (rechts) Permanentmagneten, weichmagnetisches Material schraffiert, Permanentfluss-Richtung durch Dreieck angezeigt

Fig. 2    Qualitative Darstellung des Strom-Fluss-Zusammenhangs in d-Richtung mit differentiellen Induktivitäten

Fig. 3    Qualitative Darstellung des Strom-Fluss-Zusammenhangs in q-Richtung mit differentiellen und absoluten Induktivitäten

Fig. 4    Stromvektorsummation in Rotorkoordinaten und Anisotropieverschiebung bei geometrisch isotropen Maschinen

Fig. 5    Qualitativer Verlauf des Anisotropiebetrags über dem Betrag des Sättigungsstroms

Fig. 6    Stromvektorsummation in Statorkoordinaten und resultierende Abhängigkeit des Betrages und des Winkels des Sättigungsstroms von der Rotorlage

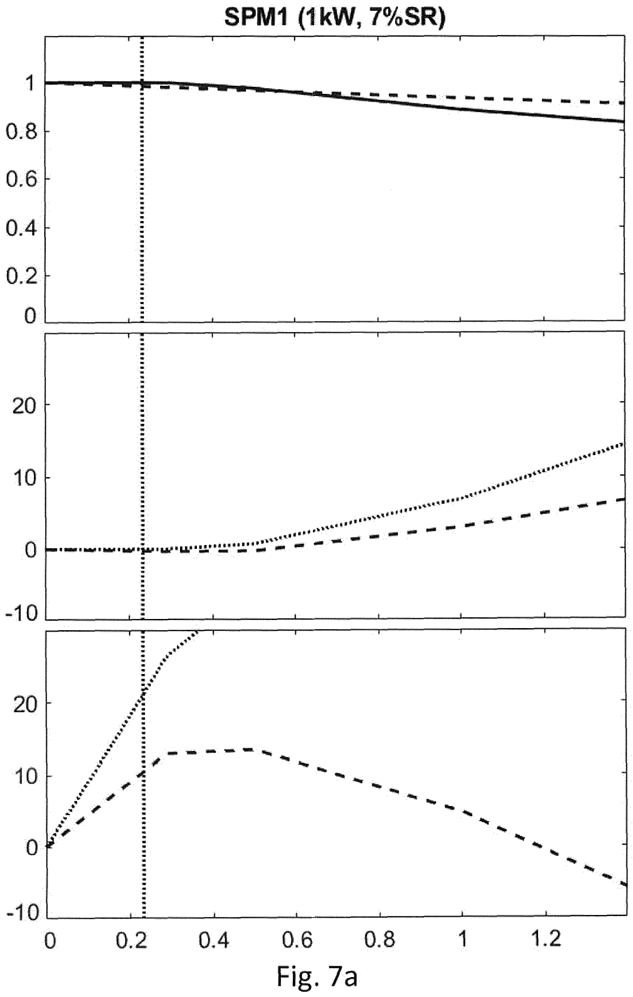

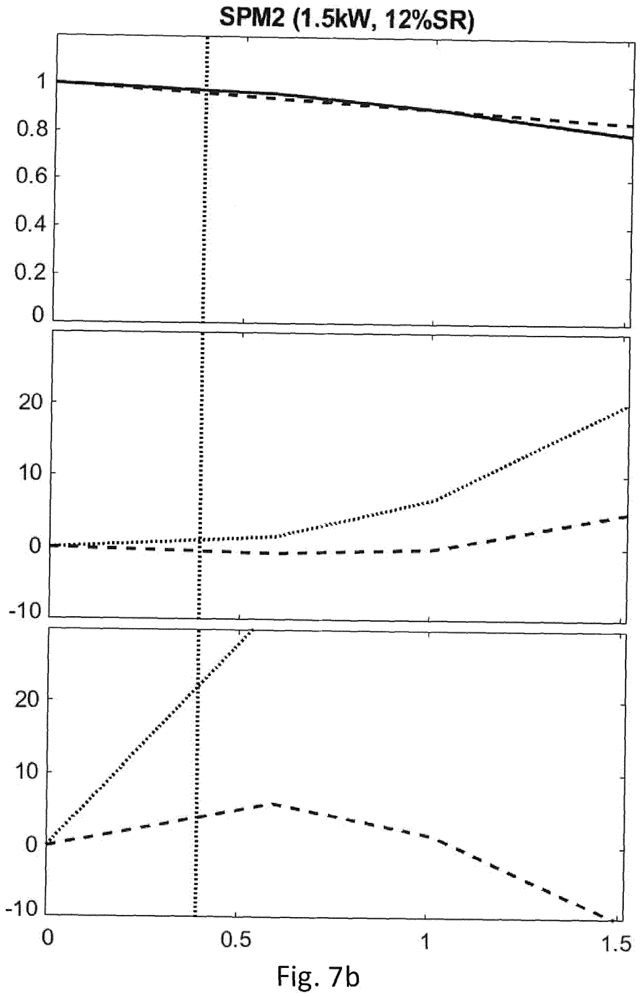

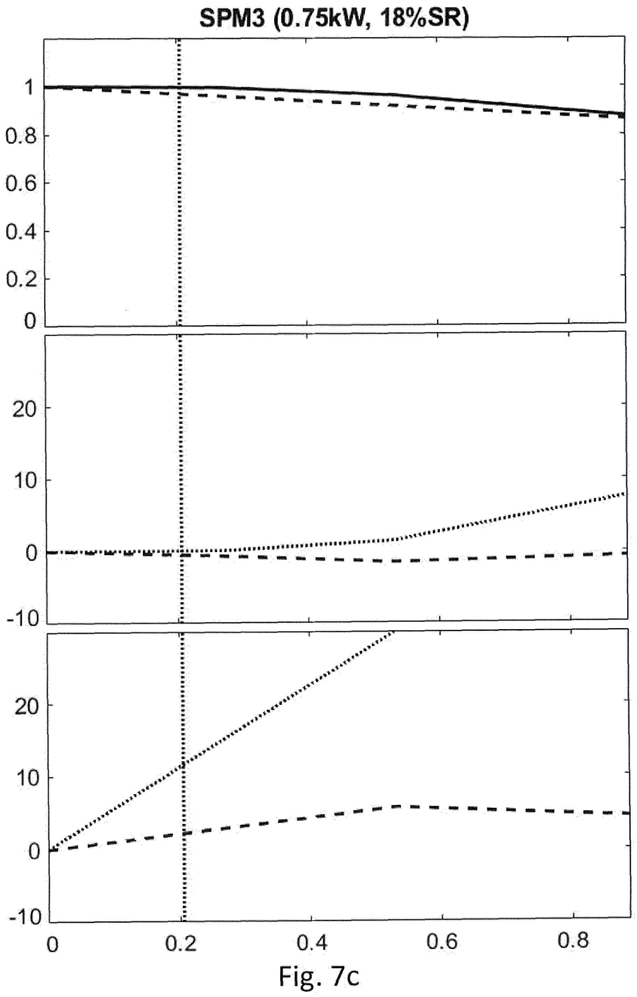

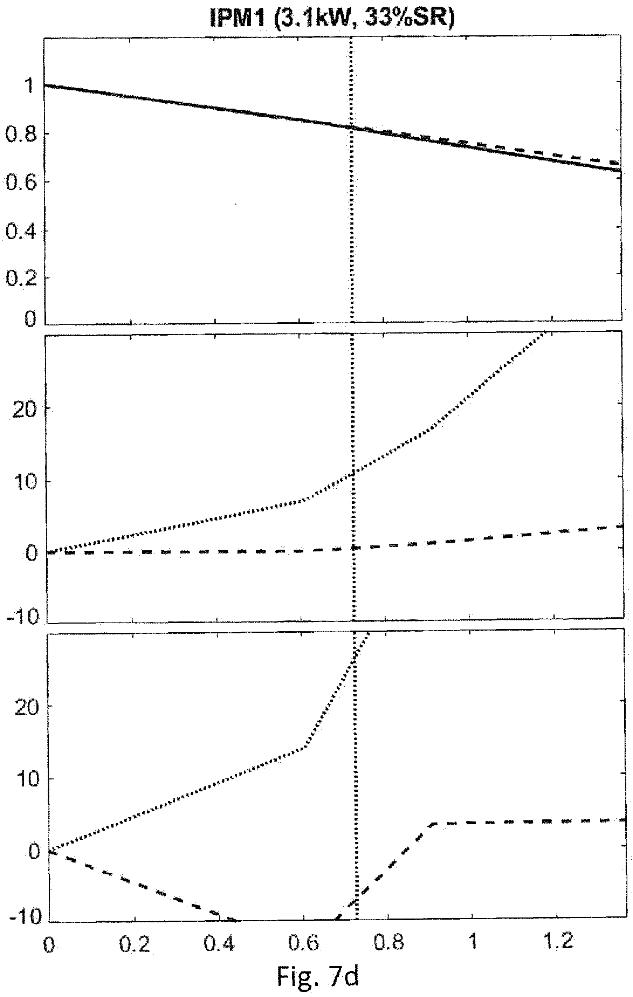

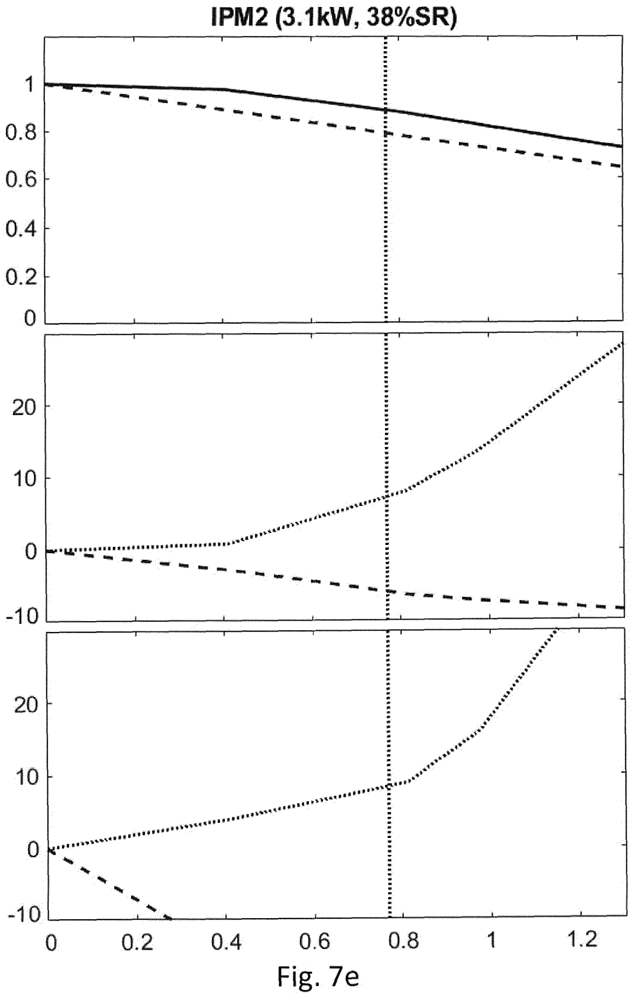

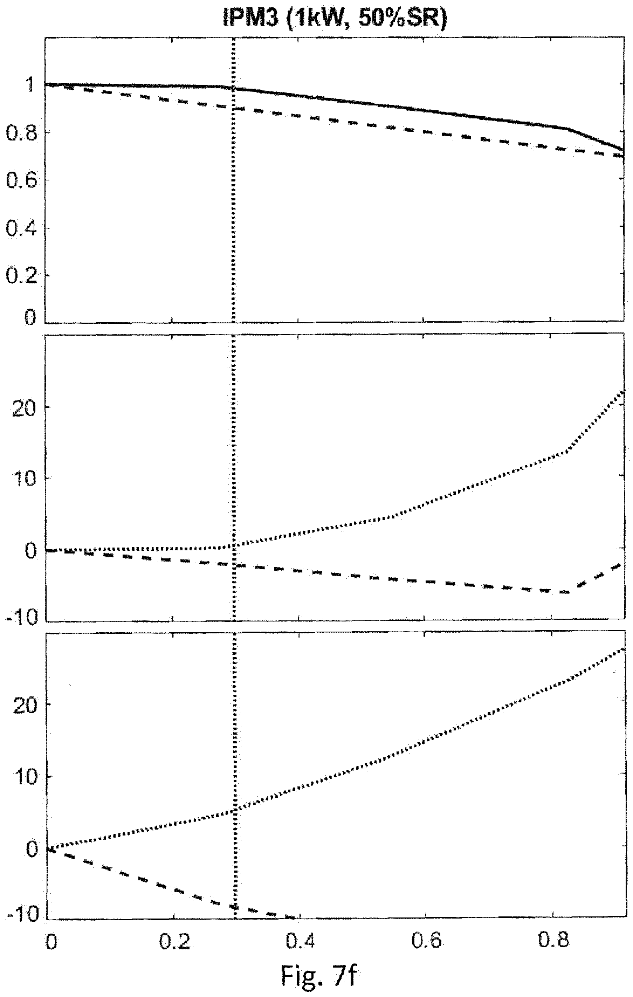

Fig. 7a-f  Aus Messdaten berechnete Verläufe von 3 geometrisch isotropen (SPM) und 3 geometrisch anisotropen (IPM) PM-Synchronmaschinen, jeweils aufgetragen über der normierten Last $i_q/i_{pm}$, jeweils oben: der Verlauf der absoluten Induktivität $L_q(i_q)/L_{qq0}$ gemessen (durchgängig) und gemäß Sättigungsannahme (gestrichelt), jeweils vertikal mittig: der Verlauf des resultierenden Grundwellen-Winkelfehlers $\hat{\theta}_r - \theta_r$ in [° el] ohne (gepunktet) und mit (gestrichelt) Sättigungsannahme, und jeweils unten: der Verlauf des Anisotropie-basierten Schätzfehlers $\hat{\theta}_r - \theta_r$ in elektrischen Grad ohne (gepunktet) und mit (gestrichelt) Sättigungsannahme. Die vertikale gepunktete Linie markiert jeweils den Nennstrom laut Typenschild.

Fig. 8a-c  Experimentelle Ergebnisse des geschlossenen geberlosen Regelkreises mit SPM3 jeweils aufgetragen über der Zeit in Sekunden; jeweils oben die geschätzte Rotorlage $\theta_r$ in [rad], jeweils vertikal mittig der q-Strom in geschätzten Rotorkoordinaten $i_{\hat{q}}/i_{pm}$ und jedwels unten der Anisotropie-ba- sierte Schätzfehler $\hat{\theta}_r - \theta_r$ in [° el]; Fig. 8a zeigt den Betrieb ohne Sättigungsannahme, Fig. 8b mit Annahme zur Anisotropie-Verschiebung und Fig. 8c mit Annahme zur eindeutigen Rotorlage-Zuordnung (RPA).

Es wird darauf hingewiesen, dass die Figuren nur beispielhafte Anordnungen von Maschinen bzw. Verläufe physikalischer Größen zeigen, und dass das hier beschriebene Verfahren bzw. dessen Ausführungsformen nicht auf die Darstellungen in den Figuren beschränkt sind.

Der Begriff "Maschine" wird hier im Sinne einer "elektrischen Maschine" also eines Elektromotors oder eines elektrischen Generators verwendet. Grundwellenverfahren nutzen die allgemeine Spannungsgleichung der Maschine

$$u_s^s = R_s i_s^s + \frac{d\psi_s^s}{dt} \qquad (1)$$

$$\psi_s^s = T(\theta_r)\,\psi_s^r(i_s^r) \qquad (2)$$

$$= \begin{bmatrix} \cos\theta_r & -\sin\theta_r \\ \sin\theta_r & \cos\theta_r \end{bmatrix} \begin{bmatrix} L_d(i_d,i_q)i_d + \psi_{pm} \\ L_q(i_d,i_q)i_q \end{bmatrix} \qquad (3)$$

,

woraus sich unter Kenntnis der Parameter Widerstand $R_s$ und absoluter q-Induktivität $L_q$ aus der Zeitverläufe von Strom und Spannung bei mittleren und hohen Drehzahlen die Rotorlage $\theta_r$ berechnen lässt, z.B. mittels folgender Rechenvorschrift

$$\theta_r = \angle\left(\int (u_s^s - R_s i_s^s)\,dt - L_q i_s^s\right). \qquad (4)$$

Dabei sind die sog. absoluten Induktivitäten $L_d$ und $L_q$ als Quotient aus Flussverkettung (kurz Fluss) und Strom definiert und dadurch gekennzeichnet, dass sie im Subskript nur einen Achsenbezug (z.B. q) tragen

$$L_d = \frac{\psi_d - \psi_{pm}}{i_d} \qquad (5)$$

$$L_q = \frac{\psi_q}{i_q}. \qquad (6)$$

Anisotropie-basierte Verfahren nutzen den Hochfrequenz-Zusammenhang

$$u_{hf}^s = T(\theta_r) \begin{bmatrix} L_{dd} & L_{dq} \\ L_{dq} & L_{qq} \end{bmatrix} T(-\theta_r) \frac{\Delta i_{hf}^s}{\Delta t} \tag{7}$$

$$= T(\theta_a) \begin{bmatrix} L_\Sigma - L_\Delta & 0 \\ 0 & L_\Sigma + L_\Delta \end{bmatrix} T(-\theta_a) \frac{\Delta i_{hf}^s}{\Delta t} \tag{8}$$

woraus sich beispielsweise nach [29], [30] oder [31] ohne Parameterkenntnis der Anisotropiewinkel $\theta_a$ berechnen lässt. Unter Kenntnis der lastabhängigen Anisotropie-Verschiebung $\theta_{ar}(i_s^r)$ lässt sich im Betrieb dem gemessenen Ansitropiewinkel $\tilde{\theta}_a$ ein Rotorlage-Schätzwert $\hat{\theta}_r$ zuordnen

$$\hat{\theta}_r = \tilde{\theta}_a - \theta_{ar}(i_s^r). \tag{9}$$

Dabei sind die sog. differentiellen Induktivitäten $L_{dd}$, $L_{dq}$ und $L_{qq}$ als Ableitung des Flusses nach dem Strom definiert und tragen zwei Achsenbezüge im Subskript

$$L_{dd} = \frac{d\psi_d}{di_d} \tag{10}$$

$$L_{qq} = \frac{d\psi_q}{di_q} \tag{11}$$

$$L_{dq} = \frac{d\psi_d}{di_q}. \tag{12}$$

In der Regel verläuft der Fluss über dem Strom nichtlinear, weshalb die Werte $L_{dd}$, $L_{dq}$ und $L_{qq}$ stromabhängig sind. Der spezielle Wert einer stromabhängigen Größe bei Nullstrom (sog. Wert im unbestromten Zustand) ist durch den zusätzlichen Variablenindex 0 gekennzeichnet - im Fall der differentiellen Induktivitäten z.B. $L_{dd0}$ und $L_{qq0}$.

Häufig arbeiten Anisotropie-Verfahren jedoch mit Spannungsinjektion und werten die Stromantwort aus, weshalb die inverse differentielle Induktivität relevant ist, die häufig vereinfacht als Admittanz Y bezeichnet wird

$$\frac{\Delta i_{hf}^s}{\Delta t} = T(\theta_r) \begin{bmatrix} Y_{dd} & Y_{dq} \\ Y_{dq} & Y_{qq} \end{bmatrix} T(-\theta_r) \, u_{hf}^s \tag{13}$$

$$= T(\theta_a) \begin{bmatrix} Y_\Sigma - Y_\Delta & 0 \\ 0 & Y_\Sigma + Y_\Delta \end{bmatrix} T(-\theta_a) \, u_{hf}^s \tag{14}$$

$$Y_{dd} = \frac{di_d}{d\psi_d} \tag{15}$$

$$Y_{qq} = \frac{di_q}{d\psi_q} \tag{16}$$

$$Y_{dq} = \frac{di_d}{d\psi_q}. \tag{17}$$

Hierin ist der sog. Anisotropiebetrag $Y_\Delta$ die halbe Differenz zwischen der richtungsabhängig größten und kleinsten Admittanz

$$Y_{\Delta} = \sqrt{\left(\frac{Y_{dd} - Y_{qq}}{2}\right)^2 + Y_{dq}^2} \qquad (18)$$

und gibt an, wie stark die Richtungsabhängigkeit der HF-Stromantwort ist.

Dabei bedeutet Richtungsabhängigkeit (griechisch Anisotropie) immer: Abhängigkeit von der Richtung der Betrachtung des Strom-Spannungs-Zusammenhangs (nicht der Rotorlage) über welcher verschiedene differentielle Induktivitätswerte wirksam sind (in d-Richtung wirkt $L_{dd}$ bzw. $Y_{dd}$, in q-Richtung $L_{qq}$ bzw. $Y_{qq}$ etc).

Im unbestromten Zustand ist die Koppelkomponente $Y_{dq}$ näherungsweise Null, wodurch sich (18) vereinfacht zu

$$Y_{\Delta 0} = \frac{Y_{dd0} - Y_{qq0}}{2}. \qquad (19)$$

Der Anisotropiewinkel $\theta_a$ ist die Richtung der kleinsten differentiellen Induktivität und folglich der größten Admittanz. Um $\pm 90°$ (elektrisch) versetzt findet sich die Richtung der größten differentiellen Induktivität und folglich der kleinsten Admittanz. Der Anisotropiewinkel kann deshalb aus beiden Größen äquivalent beispielsweise wie folgt berechnet werden

$$\theta_a = \frac{1}{2} atan2\big(Y_{\alpha\beta} + Y_{\beta\alpha}, \ Y_{\alpha\alpha} - Y_{\beta\beta}\big) \qquad (20)$$

$$= \frac{1}{2} atan2\big(L_{\alpha\beta} + L_{\beta\alpha}, \ L_{\beta\beta} - L_{\alpha\alpha}\big). \qquad (21)$$

Weiterhin werden im Rahmen der hier beschriebenen Ausführungsformen hinsichtlich der Rotortopologie von Synchronmaschinen zwei Klassen unterschieden:

1. *geometrisch isotrope* Synchronmaschinen haben einen Rotorquerschnitt, in dem sich die Menge und Form des weichmagnetischen Materials zwischen den verschiedenen Magnetpfaden der Phasenwicklungen nicht unterscheidet, sodass ihre magnetische Anisotropie sich ausschließlich dadurch begründet, dass das erregende Element (z.B. Permanentmagnet oder Erregerwicklung) das weichmagnetische Material lokal (d.h. richtungsabhängig) sättigt. Die magnetische Anisotropie dieser Maschinen im unbestromten Zustand ist meist kleiner, nämlich

$$\frac{|L_{dd0} - L_{qq0}|}{L_{dd0} + L_{qq0}} < 20\%.$$

2. *geometrisch anisotrope* Synchronmaschinen zeigen einen Rotorquerschnitt, in dem sich die Menge und/oder Form des weichmagnetischen Materials zwischen den verschiedenen Magnetpfaden der Phasenwicklungen unterscheidet, was eine zusätzliche anisotrope Komponente erzeugt. Die magnetische Anisotropie dieser Maschinen im unbestromten Zustand ist dadurch meist größer, nämlich $\frac{|L_{dd0} - L_{qq0}|}{L_{dd0} + L_{qq0}} > 20\%$ .

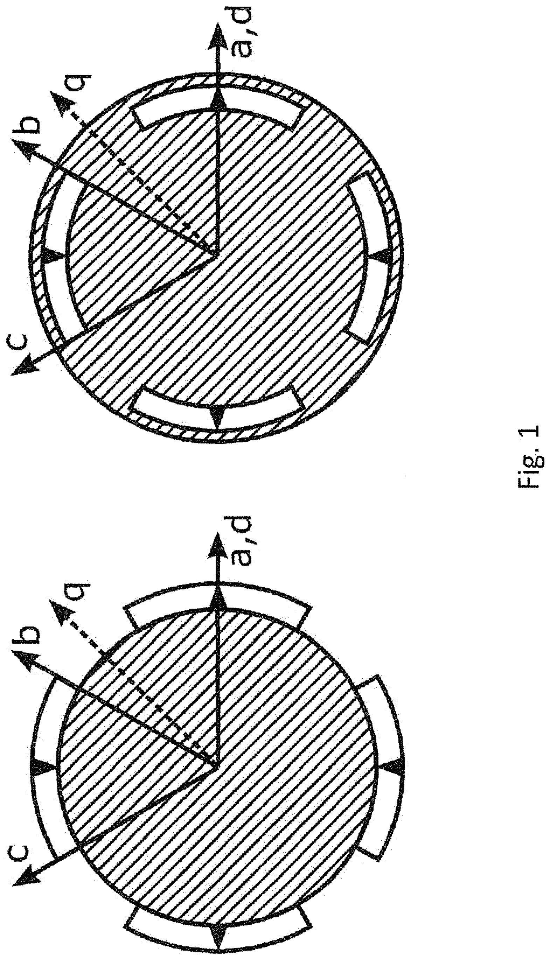

Fig. 1 zeigt links ein typisches Beispiel für eine geometrisch isotrope Maschine und rechts ein typisches Beispiel für eine geometrisch anisotrope Maschine. Nur die schraffierten Bereiche haben eine hohe magnetische Leitfähigkeit und führen aufgrund der Geometrie des rechten Querschnitts bei diesem zu einer deutlich erhöhten Induktivität in q-Richtung.

Unabhängig von der tatsächlichen Geometrie ist eine Zuweisung der meisten Maschinen in ihre entsprechende Klasse auf Basis des Klemmverhaltens möglich, wenn die initial vorgefundene Anisotropie gegen den Schwellwert 20% verglichen wird.

### 3 Sättigungsannahmen

Im Folgenden wird ein Verfahren zur lastfreien Bestimmung lastabhängiger Lagezuordnungsparameter einer Synchronmaschine ohne Lagegeber vorgestellt. Die Synchronmaschine wird über getaktete Klemmspannungen angesteuert, aus denen in Verbindung mit der gemessenen Stromantwort die Induktivität bzw. Admittanz berechnet wird. Alternativ zu dieser Berechnung kann die lastfrei kleinste und die lastfrei größte differentielle Induktivität ($L_{dd0}$ und $L_{qq0}$) auch bekannt sein. Aus der lastfrei kleinsten und der lastfrei größten differentiellen Induktivität ($L_{dd0}$ und $L_{qq0}$) und dem Kurzschlussstrom ($i_{pm}$) wird das magnetische Sättigungsverhalten unter Last der absoluten Induktivität und der magnetischen Anisotropie der Synchronmaschine vorhergesagt und im Lagegeber-losen Regelungsbetrieb kompensiert und-/oder zur Lagezuordnung genutzt.

In manchen Ausführungsformen entspricht eine lastfreie differentielle Induktivität der Ableitung der Flussverkettung nach dem Strom (vgl. (10)-(12)) im Betriebspunkt mit Null Strom.

In manchen Ausführungsformen sind die kleinste und die größte differentielle Induktivität der richtungsanhängig kleinste und größte differentielle Induktivitätswert eines Betriebspunktes, wobei die Richtungsabhängigkeit der magnetischen Anisotropie entspricht.

Wenn die lastfrei kleinste und die lastfrei größte differentielle Induktivität $L_{dd0}$ und $L_{qq0}$ nicht bekannt sind, können diese Werte durch elektrische Anregung der Maschinen aus dem Strom-Spannungs-Zusammenhang berechnet werden. Die Anregung können beispielsweise Testpulse, sinusförmige Spannungsverläufe oder ein zeitdiskretes Spannungs-Injektionsmuster sein. Zur Berechnung finden sich leicht verschiedene Ansätze, die üblicherweise die Spannungsanregung und die Stromantwort (z.B. Stromamplitude oder Stromdifferenz pro Zeitintervall) ins Verhältnis setzten. Bei Anisotropie-Verfahren mit zeitdiskretem Injektionsmuster [31] [32] zum Beispiel können der Anisotropie-Betrag $Y_\Delta$ und der isotrope Anteil $Y_\Sigma$ interne Rechengrößen sein, aus deren Werten und der isotrope Anteil bei Nullstrom $Y_{\Delta0}$ und $Y_{\Sigma0}$ die Induktivitäten $L_{dd0}$ und $L_{qq}$ beispielsweise wie folgt berechnet werden können

$$L_{dd0} = \frac{1}{Y_{\Sigma0}+Y_{\Delta0}} \qquad\qquad (22)$$

$$L_{qq0} = \frac{1}{Y_{\Sigma0}-Y_{\Delta0}}. \qquad\qquad (23)$$

Aber auch beliebige andere Vorschriften zur Berechnung einer differentiellen Induktivität können verwendet werden, um die Werte $L_{dd0}$ und $L_{qq0}$ als Grundlage für das in diesem Dokument beschriebene Verfahren und/oder für die beschriebenen Ausführungsformen zur Verfügung zu stellen.

Auch wenn differentielle Induktivitäten nur für Anisotropie-Verfahren direkt wirksam sind, werden sie in manchen Ausführungsformen ebenfalls zur Parametrierung von Grundwellenverfahren genutzt.

Der Kurzschlussstrom $i_{pm}$ ist allgemein ein zur Erregung durch den Permanentmagnet (PM) äquivalenter Strombetrag, der beispielsweise

- in negativer d-Richtung eingeprägt zur Auslöschung der Flussverkettung $\psi_s^s = 0$ führt, oder
- sich einstellt, wenn die Welle bei Kurzschluss der Klemmen (Null Spannung) schnell (z.B. Nenndrehzahl) angetrieben, oder
- nach einem zu den vorgenannten Methoden physikalisch äquivalenten Prinzip bestimmt wird, oder
- der mit einer der nachfolgenden Berechnungsvorschriften im Rahmen der vorgestellten Sättigungsannahme ermittelt wird.

Aber auch beliebige andere Vorschriften zur Berechnung eines zur Erregung durch den PM äquivalenten Strombetrags können verwendet werden, um den Wert des Kurzschlussstroms $i_{pm}$ für das in diesem Dokument beschriebene Verfahren und/oder für die beschriebenen Ausführungsformen zur Verfügung zu stellen.

Die grundlegende Idee der Sättigungsannahme und aller ihrer Ausführungsformen ist, dass im unbestromten Zustand die Maschine in d-Richtung durch den PM in einem bestimmten Grad gesättigt und in q-Richtung ungesättigt ist und dass in q-Richtung der gleiche Grad an Sättigung vorliegen wird, wenn in q-Richtung der Kurzschlussstrom $i_{pm}$ eingeprägt wird. Konkret unterliegt manchen Ausführungsformen die Annahme, dass die q-Achse (Richtung quer zum PM) das gleiche magnetische Verhalten annimmt, wie die d-Achse (Richtung des PM) im unbestromten Zustand, wenn in q-Richtung der Kurzschlussstrom ($i_q = i_{pm}$) eingeprägt wird.

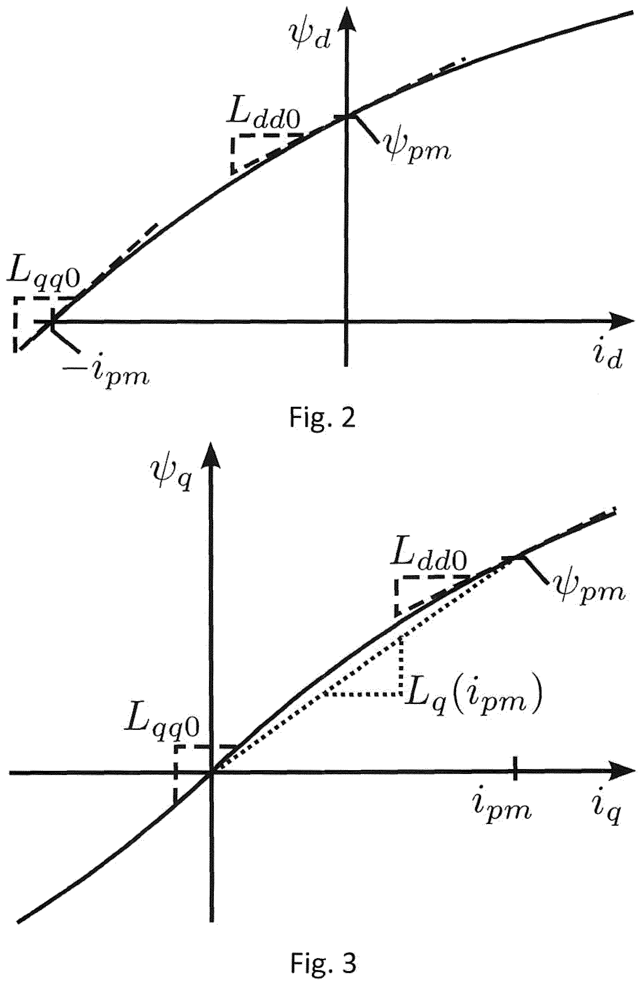

Fig. 2 zeigt qualitativ einen beispielhaften Strom-Fluss-Zusammenhang in d-Richtung, welcher aufgrund der Sättigung des weichmagnetischen Materials eine gekrümmte Form aufweist. Ohne d-Strom $i_d = 0$ gleicht der Fluss dem PM-Fluss $\psi_d = \psi_{pm}$ und der Anstieg (angedeutet durch die gestrichelte Tangente mit Anstiegs-Dreieck) gleicht der differentiellen d-Induktivität im unbestromten Zustand $L_{dd} = L_{dd0}$. Bei $i_d = -i_{pm}$ ist der Fluss ausgelöscht $\psi_d = 0$, das Eisen folglich ungesättigt und gemäß Sättigungsannahme der Anstieg der Flusskurve gleich der differentiellen q-Induktivität im unbestromten Zustand $L_{dd} = L_{qq0}$.

Beim Anschluss einer unbekannten Synchronmaschine kann der PM-Fluss $\psi_{pm}$ i.d.R. aus den Typenschilddaten berechnet (z.B. 0,471-mal Nennmoment geteilt durch Nennstrom und Polpaarzahl) oder alternativ durch Drehen der Welle (z.B. aus dem Verhältnis von induzierter Spannung zu Drehzahl) bestimmt werden.

Auf Basis dieser Daten $\psi_{pm}$, $L_{dd0}$ und $L_{qq0}$ kann nun im Rahmen der Sättigungsannahme der Kurzschlussstrom $i_{pm}$ wie folgt berechnet werden. In Fig. 2 ist ersichtlich, dass für d-Ströme zwischen $-i_{pm} \le i_d \le 0$ alle Anstiegswerte $L_{dd}$

zwischen $L_{dd0} \leq L_{dd} \leq L_{qq0}$ liegen, wobei der genaue Übergang von $L_{qq0}$ hin zu $L_{dd}$ maschinenabhängig variieren kann.

In manchen Ausführungsformen wird nun der Kurzschlussstrom ($i_{pm}$) als Quotient aus der PM-Flussverkettung ($\psi_{pm}$) geteilt durch eine Kombination der lastfrei kleinsten und der lastfrei größten differentiellen Induktivität ($L_{dd0}$ und $L_{qq}$) berechnet. Diese Berechnung kann beispielsweise wie folgt erfolgen

$$i_{pm} = \frac{\psi_{pm}}{k_d L_{dd0} + k_q L_{qq0}}, \qquad (24)$$

wobei mittels $k_d$ und $k_q$ der Einfluss der jeweiligen Induktivität gewichtet werden kann.

In manchen Ausführungsformen entspricht die Kombination einer Mittelwertbildung, beispielsweise mit den Koeffizienten $k_d = k_q = \frac{1}{2}$. Dazu wird beispielsweise angenommen, dass der mittlere Anstieg dem Mittelwert der Randanstiege gleicht $\overline{L_{dd}} = \frac{L_{dd0} + L_{qq}}{2}$, sodass $i_{pm}$ wie folgt berechnet werden kann

$$i_{pm} = \frac{2\psi_{pm}}{L_{dd0} + L_{qq0}}. \qquad (25)$$

Alternativ kann der Kurzschlussstrom $i_{pm}$ beispielsweise durch einen Kurzschlussversuch bestimmt werden. Unabhängig von seiner Bestimmung ist der Kurzschlussstrom $i_{pm}$ ein Schlüsselparameter für die nun folgenden Berechnungen von Parametern für Grundwellenverfahren in Abschnitt 3.1 und für Anisotropie-Verfahren in Abschnitt 3.2 und 3.3.

Die vorgestellten Berechnungsansätze der Parameter für Anisotropie-Verfahren sind vorzugsweise auf geometrisch isotrope Maschinentypen anwendbar. Deshalb findet in machen Ausführungsformen eine Kompensation und/oder Nutzung zur Lagezuordnung der Anisotropie-Sättigungsberechnungen nur dann statt, wenn die Differenz zwischen der lastfrei größten und der lastfrei kleinsten differentiellen Induktivität weniger als 20% ihrer Summe beträgt.

## 3.1 Grundwelleninduktivität

Ein Parameter von Grundwellenverfahren, der zur Berücksichtigung von Sättigung stromabhängig hinterlegt wird, ist beispielsweise die absolute Induktivität in q-Richtung $L_q$.

In manchen Ausführungsformen wird die absolute Induktivität $L_q$ als Parameter zur Auswertung der induzierten Spannung so berechnet, dass sie ausgehend von ihrem bei Null Strom geltenden Wert, der lastfrei größten differentiellen Induktivität ($L_{qq0}$), mit zunehmendem Strom so absinkt, dass sie bei Erreichen des Kurzschlussstroms ($i_{pm}$) dem Mittelwert der lastfrei kleinsten und größten differentiellen Induktivität ($L_{dd0}$ und $L_{qq0}$) gleicht.

Fig. 3 zeigt einen beispielhaften Strom-Fluss-Zusammenhang in q-Richtung, der sich für eine geometrisch isotrope Maschine gleich zu dem der d-Richtung ergibt - mit dem Unterschied, dass die Kurven zueinander derart horizontal verschoben sind, dass die q-Kurve punktsymmetrisch durch den Ursprung und die d-Kurve durch -$i_{pm}$ verläuft.

Gemäß obiger Sättigungsannahme dem die folgenden Ausführungsbeispiele unterliegen, erreicht $\psi_q = \psi_{pm}$, wenn $i_q = i_{pm}$, wo dann ebenfalls der Anstieg $L_{qq} = L_{dd0}$ ist. Die absolute Induktivität $L_q$ trägt jedoch einen von $L_{qq}$ verschiedenen Wert, wie die gepunkteten Linien veranschaulichen.

Um von den (möglicherweise Injektions-basiert gemessenen) differentiellen Induktivitäten $L_{dd0}$ und $L_{qq0}$ auf den Verlauf der absoluten Induktivität $L_q(i_q)$ zu schlussfolgern, wird beispielsweise zunächst angenommen, dass der Verlauf der differentiellen Induktivität $L_{qq}(i_q)$ linear und symmetrisch $L_{qq}(i_q) = L_{qq}(-i_q)$ ist

$$L_{qq}(i_q) = L_{qq0} + \left(L_{dd0} - L_{qq0}\right)\frac{|i_q|}{i_{pm}}. \qquad (26)$$

Gemäß (11) ergibt sich $\psi_q(i_q)$ beispielsweise per Integration

$$\psi_q(i_q) = \int\limits_0^{i_q} L_{qq}(i_q)\, di_q \tag{27}$$

$$= L_{qq0} i_q + \frac{L_{dd0} - L_{qq0}}{2 i_{pm}} |i_q| i_q \tag{28}$$

und gemäß (6) der Verlauf $L_q(i_q)$ beispielsweise per Division $\psi_q / i_q$

$$L_q(i_q) = L_{qq0} + \frac{L_{dd0} - L_{qq0}}{2 i_{pm}} |i_q| \tag{29}$$

$$= L_{qq0} + m_L |i_q| \tag{30}$$

$$m_L = \frac{L_{dd0}^2 - L_{qq0}^2}{4 \psi_{pm}}, \tag{31}$$

wobei $m_L$ unter Verwendung von (25) ausgedrückt wurde. Für $i_q = i_{pm}$ ergibt (29) $L_q = \frac{L_{dd0} + L_{qq0}}{2}$ und ist damit konsistent zur Berechnung des Kurzschlussstroms (25). Für $i_q = 0$ ergibt (29) $L_q = L_{qq0}$ und entspricht damit dem Fakt, dass für Nullstrom die differentielle und die absolute Induktivität gleich sind.

Beispielsweise mit diesem linearen Gesetz (29) bzw. (30)-(31) kann basierend auf den initial mess- und/oder berechenbaren Parametern $L_{dd0}$, $L_{qq0}$ und $\psi_{pm}$ die Sättigung des zentralen Grundwellenparameters $L_q$ approximiert werden. Diese Approximation trifft bei geometrisch isotropen Maschinen gut zu. Bei geometrisch anisotropen Maschinen ist diese Approximation zwar mit Fehlern im konservativen Bereich behaftet - d.h. die Sättigung wird zu schwach kompensiert -, weil das Sättigungsverhalten des weichmagnetischen Materials in q-Richtung nicht aus der d-Richtung abgeleitet werden kann, aber dennoch anwendbar.

Eine Kompensation gemäß dieser Approximation ist besser als keine Kompensation anzuwenden. Daher kann das Gesetz für die Stromabhängigkeit der Grundwelleninduktivität (29) bzw. (30)-(31) auf alle PM-Maschinen angewendet werden - für geometrisch isotrope, wie auch für geometrisch anisotrope.

### 3.2 Anisotropieverschiebung

Die Anisotropie von geometrisch isotropen Maschinen ist hervorgerufen durch lokale Sättigung des weichmagnetischen Materials, welche im unbestromten Zustand in PM-Richtung maximal ist. Dann ist die Anisotropie mit dem Rotor ausgerichtet und läuft bei Drehung näherungsweise mit ihm um. Unter Einprägung eines Drehmoment-bildenden Stroms zeigt sich eine relative Verschiebung zwischen Rotor und Anisotropie, weil der quer zum PM ausgerichtete Strom den Sättigungszustand beeinflusst.

In manchen Ausführungsformen wird ein Sättigungsstromvektor durch vektorielle Addition des Phasenstromvektors und des Kurzschlussstromvektors berechnet, wobei der Kurzschlussstromvektor den Betrag des Kurzschlussstroms hat und in Richtung des PM ausgerichtet ist.

In der folgenden beispielhaften Beschreibung der Ausführungsform ist der Sättigungsstromvektor durch $i_{sat}^{s}$, der Phasenstromvektor durch $i_s^{s}$ und der Kurzschlussstromvektor durch $i_{pm}^{s}$ repräsentiert - jeweils in Statorkoordinaten ausgedrückt (Superskript $s$). Die gleichen Vektoren in Rotorkoordinaten dargestellt sind $i_{sat}^{r}$, $i_s^{r}$ und $i_{pm}^{r}$.

Der Kurzschlussstrom $i_{pm}^{r}$ und der Strom in der Statorwicklung $i_s^{r}$ überlagern sich nun beispielsweise linear und die Summe ergibt den Sättigungsstrom $i_{sat}^{r}$

$$i_{sat}^r = i_{pm}^r + i_s^r \qquad (32)$$

$$= \begin{bmatrix} i_{pm} + i_d \\ i_q \end{bmatrix}, \qquad (33)$$

dessen Richtung das Sättigungsmaximum vorgibt und damit die Anisotropie ausrichtet. Damit ergibt sich die sog. Anisotropieverschiebung $\theta_{ar}$, d.h. die Verschiebung des Anisotropiewinkels relativ zum Rotor (bzw. der Anisotropiewinkel in Rotorkoordinaten), nach der Ausrichtung des Sättigungsstroms in Rotorkoordinaten $\angle i_{sat}^r$

$$\theta_{ar} = \theta_a - \theta_r \qquad (34)$$

$$= atan2\big(i_{satq}, \ i_{satd}\big) = \angle i_{sat}^r. \qquad (35)$$

So wird in machen Ausführungsformen die Anisotropieverschiebung $\theta_{ar}$ als Parameter zur Auswertung der magnetischen Anisotropie so berechnet, dass sie mit zunehmendem Phasenstrom so anwächst, dass die damit angenommene Ausrichtung der-Anisotropie der Richtung des Sättigungsstromvektors entspricht.

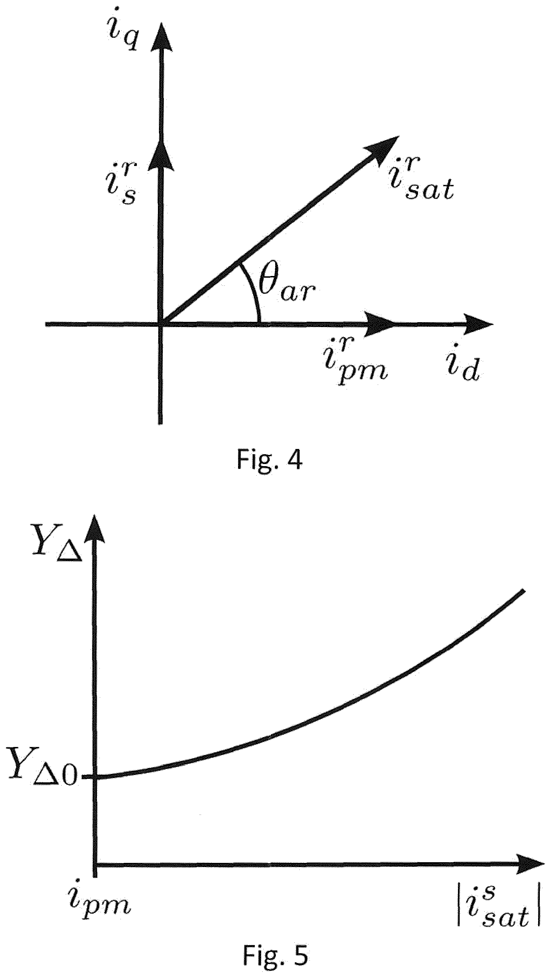

Fig. 4 zeigt beispielhaft, wie der Kurzschlussstrom $i_{pm}^r$ und der Statorstrom $i_s^r$ in Rotorkoordinaten vektoriell addiert werden, woraus sich der Sättigungsstrom $i_{sat}^r$ ergibt, dessen Ausrichtung in Rotorkoordinaten bei geometrisch isotropen Maschinen der Anisotropieverschiebung $\theta_{ar}$ gleicht.

Dieser Verschiebungswinkel $\theta_{ar}$ wird beispielsweise im Betrieb unter Last vom gemessenen Anisotropiewinkel $\tilde{\theta}_a$ (Ergebnis der Anisotropie-Identifikation, z.B. eines der Verfahren [6] [7] [8] [31]) subtrahiert, um die geschätzte Rotorlage zu erhalten

$$\hat{\theta}_r = \tilde{\theta}_a - \theta_{ar}. \qquad (36)$$

Weil bei geometrisch isotropen Maschinen die sog. Maximum-Torque-per-Ampere (MTPA) Sollstrom-Trajektorie nahezu auf der q-Achse liegt, werden diese Maschinen im unteren Drehzahlbereich meist ohne d-Sollstromanteil betrieben. Damit lässt sich (35) vereinfachen zu

$$\theta_{ar} = atan2\big(i_q, \qquad i_{pm}\big) \qquad (37)$$

$$\approx \frac{0{,}8}{i_{pm}} i_q. \qquad (38)$$

Letztere lineare Approximation (38) verhält sich beispielsweise im Bereich $|i_q| < i_{pm}$ tendenziell konservativ (keine Überkompensation) mit Approximationsfehlern bis kleiner 3,7°, wobei sie rechensparsamer ist als (37), insbesondere weil der Faktor $k_{ar} = 0{,}8/i_{pm}$ im Betrieb konstant ist.

### 3.3 Parameter für eindeutige Anisotropie-Rotorlage-Zuordnung

Wird zusätzlich der Anisotropiebetrag $Y_\Delta = \big|y_\Delta^s\big|$ in Abhängigkeit vom Sättigungsstrom $i_{sat}^r$ einbezogen, kann aus den eingangs bekannten Werten $L_{dd0}$, $L_{qq0}$ und $i_{pm}$ ebenfalls eine Vorschrift zur eindeutigen Rotorlagezuordnung abgeleitet werden.

In manchen Ausführungsformen wird der Anisotropiebetrag $Y_\Delta$ als Parameter zur eindeutigen Anisotropie-Rotorlagezuordnung so berechnet, dass er ausgehend von seinem bei Nullstrom wirksamen Wert $Y_{\Delta 0}$ über dem Sättigungsstrombetrag progressiv anwächst

$$Y_\Delta = f_\Delta\big(|i_s^r|\big) \qquad (39)$$

$$f_\Delta(i_{pm}) = Y_{\Delta 0} = \frac{1}{2}\left(\frac{1}{L_{dd0}} - \frac{1}{L_{qq0}}\right), \tag{40}$$

was in Fig. 5 qualitativ dargestellt ist.

Dabei wird gemäß (40) in manchen Ausführungsformen der bei Nullstrom wirksame Wert des Anisotropiebetrags $Y_{\Delta 0}$ aus den lastfreien differentiellen Induktivitäten ($L_{dd0}$ und $L_{qq0}$) ermittelt.

Ein progressiver Verlauf bedeutet konkret, dass der Anstieg von $f_\Delta(x)$ für positive Argumente $x$ stets positiv ist und mit größer werdendem Argument ansteigt

$$\frac{df_\Delta(x)}{dx} > 0, \quad \forall\, x > 0 \tag{41}$$

$$\frac{d^2 f_\Delta(x)}{dx^2} > 0, \quad \forall\, x > 0. \tag{42}$$

In manchen Ausführungsformen entspricht das progressive Anwachsen des Anisotropiebetrags einem Anwachsen proportional zur dritten Potenz des Sättigungsstrombetrags. Dies wird beispielsweise durch die folgende Formel repräsentiert:

$$Y_\Delta = \frac{Y_{\Delta 0}}{i_{pm}^3}\,|i_{sat}^r|^3 = \frac{Y_{\Delta 0}}{i_{pm}^3}\,|i_{sat}^s|^3. \tag{43}$$

Aus Anisotropiebetrag und Anisotropieausrichtung lässt sich ein beispielhafter Anisotropievektor konstruieren

$$y_\Delta^s = Y_\Delta \begin{bmatrix} cos2\theta_a \\ sin2\theta_a \end{bmatrix} \tag{44}$$

in welchem alle Variablen $Y_\Delta$ und $\theta_a$ vom Sättigungsstromvektor $i_{sat}^r$ abhängen. Im Unterschied zu (37) kann für die Herleitung der eindeutigen Rotorlagezuordnung nun jedoch nicht angenommen werden, dass der d-Stromanteil Null ist

$$\theta_{ar} = atan2(i_q, \quad i_d + i_{pm}) = \angle i_{sat}^r \tag{45}$$

und es wird beispielsweise nicht die Anisotropieverschiebung relativ zum Rotor $\theta_{ar}$, sondern der Anisotropiewinkel in Statorkoordinaten $\theta_a$ gebraucht, welcher sich wie folgt abhängig vom Sättigungsstrom in Statorkoordinaten $i_{sat}^s$ beschreiben lässt

$$\theta_a = atan2(i_q, \quad i_d + i_{pm}) + \theta_r \tag{46}$$

$$= atan2(i_\beta + i_{pm}\sin\theta_r, \quad i_\alpha + i_{pm}\cos\theta_r) = \angle i_{sat}^s \tag{47}$$

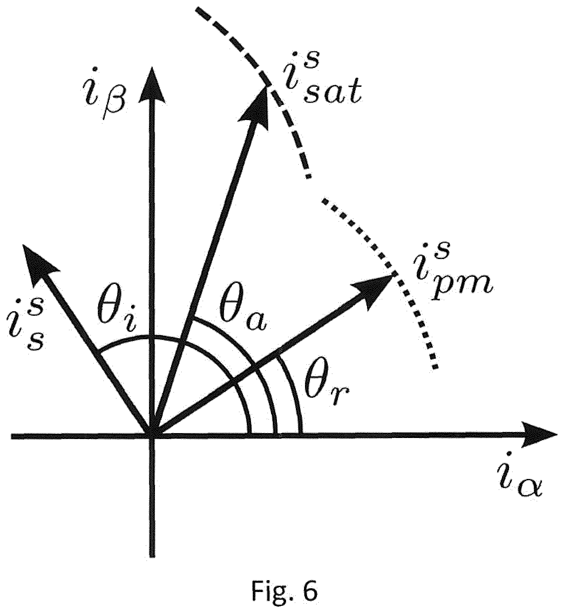

Fig. 6 zeigt beispielhaft wie sich in (47) der Kurzschlussstrom $i_{pm}^s$ und der Statorstrom $i_s^s$ in Statorkoordinaten vektoriell addieren und den Sättigungsstrom in Statorkoordinaten $i_{sat}^s$ ergeben. Unter Variation des Rotorwinkels $\theta_r$ bei konstantem Statorstrom $i_s^s$ (SFC Bedingung) bewegt sich der Kurzschlussstrom $i_{pm}^s$ auf einer konzentrischen Kreisbahn (gepunktete Linie) und der Sättigungsstrom folglich auf einer um $i_s^s$ verschobenen Kreisbahn (gestrichelte Linie). Auf dieser verschobenen Kreisbahn ändert sich sowohl sein Betrag $|i_{sat}^s| = |i_{sat}^r|$ als auch sein Winkel $\angle i_{sat}^s$ über der Rotordrehung, was (43) und (47) begründet.

Mit (43), (47) und $\left| i_{sat}^r \right| = \left| i_{sat}^s \right|$ kann der Anisotropievektor $y_\Delta^s$ nun also beispielsweise als Funktion vom Strom in Statorkoordinaten $i_s^s$ und der Rotorlage $\theta_r$ ausgedrückt werden

$$y_\Delta^s = \frac{Y_{\Delta 0}}{i_{pm}^3} \begin{bmatrix} cos\left( 2\, atan\, \dfrac{i_\beta + i_{pm}\, sin\, \theta_r}{i_\alpha + i_{pm}\, cos\, \theta_r} \right) \\ sin\left( 2\, atan\, \dfrac{i_\beta + i_{pm}\, sin\, \theta_r}{i_\alpha + i_{pm}\, cos\, \theta_r} \right) \end{bmatrix} \qquad (48)$$

$$\sqrt{\left( i_\alpha + i_{pm}\, cos\, \theta_r \right)^2 + \left( i_\beta + i_{pm}\, sin\, \theta_r \right)^2}^{\,3}$$

$$= f_s(\theta_r, i_s^s), \qquad (49)$$

was gemäß [33] die Grundlage zur Berechnung einer eindeutigen Rotorlagezuordnungsvorschrift ist.

In manchen Ausführungsformen wird also ein Modell-Anisotropievektor $(y_\Delta^s)$ konstruiert, der die Länge des Anisotropiebetrags ($Y_\Delta$) hat und im zweifachen Anisotropiewinkel ($2\theta_a$) ausgerichtet ist, wobei der Anisotropiewinkel ($\theta_a$) der Summe aus Rotorlage ($\theta_r$) und Anisotropieverschiebung ($\theta_{ar}$) entspricht, sodass der Modell-Anisotropievektor als Funktion von Phasenstromvektor ($i_s^s$) und Rotorlage ($\theta_r$) beschrieben ist. Dieser Modell-Anisotropievektor ist dann beispielsweise durch $y_\Delta^s(\theta_r, i_s^s)$ repräsentiert.

Im Folgenden werden zwei Ausführungsbeispiele beschrieben, die (49) in eine eindeutige Lagezuordnungsvorschrift (z.B. $\hat{\theta}_r = f_s'(y_\Delta^s, i_s^s)$ ) überführen.

### 3.3.1 Lineare Lagezuordnung

In manchen Ausführungsformen wird die Lageabhängigkeit des Modell-Anisotropievektors für verschiedene statorfeste Stromwerte im Sollstrom-Arbeitspunkt linearisiert und eine lineare Lagezuordnungsvorschrift verwendet, die einer Projektion des gemessenen Anisotropievektors ( $\tilde{y}_\Delta^s$ ) auf die für den gemessenen Strom geltende Linearisierung entspricht.

Dazu wird die Abhängigkeit der Funktion (49) von der Rotorlage $\theta_r$ unter der Randbedingung eines unveränderten Stroms in Statorkoordinaten $i_s^s = const$. (die sog. SFC-Trajektorie) im Sollstrom-Arbeitspunkt linearisiert.

Wie zuvor erwähnt, liegt bei geometrisch isotropen Maschinen der Sollstrom-Arbeitspunkt auf der q-Achse

$$\angle i_s^s = \theta_r + \frac{\pi}{2}. \qquad (50)$$

Um diesen Arbeitspunkt kann (50) mittels der virtuellen Verschiebung $h$ (kleiner Wert, z.B. 1°) linearisiert werden

$$y_{\Delta 0}^s(i_s^s) = f_s\left( \angle i_s^s - \frac{\pi}{2}, i_s^s \right) \qquad (51)$$

$$m_\Delta^s(i_s^s) = \frac{f_s\left( \angle i_s^s - \frac{\pi}{2} + \frac{h}{2}, i_s^s \right) - f_s\left( \angle i_s^s - \frac{\pi}{2} - \frac{h}{2}, i_s^s \right)}{h}, \qquad (52)$$

worin $m_\Delta^s$ der Anstieg und $y_{\Delta 0}^s$ der Offset der Gerade ist, welche (49) im und nahe um den Arbeitspunkt beschreibt

$$y_{\Delta L}^s(\theta_r) = m_\Delta^s(i_s^s)\, \theta_r + y_{\Delta 0}^s(i_s^s). \qquad (53)$$

Aus diesen linearisierten Parametern $m_\Delta^s$ und $y_{\Delta 0}^s$ kann nun eine beispielhafte lineare Lagezuordnungsvorschrift abgeleitet werden

$$\hat{\theta}_r = \frac{{m_\Delta^s}^T (\tilde{y}_\Delta^s - y_{\Delta 0}^s)}{{m_\Delta^s}^T m_\Delta^s}, \tag{54}$$

die einer Projektion des gemessenen Anisotropievektors $\tilde{y}_\Delta^s = \begin{bmatrix} \tilde{Y}_{\Delta\alpha} & \tilde{Y}_{\Delta\beta} \end{bmatrix}^T$ auf die Gerade $y_{\Delta L}^s(\theta_r)$ mit Übernahme des zugehörigen Winkelwerts entspricht.

Weil im Rahmen dieser beispielhaften Sättigungsannahme keine Information über Anisotropie-Harmonische vorliegt, enthalten $m_\Delta^s$ und $y_{\Delta 0}^s$ bereits alle verfügbaren Informationen für einen Strombetrag $|i_s^s|$. Hierzu kann eine Auswertung in Doppelstromkoordinaten gemäß [33] erfolgen

$$y_\Delta^{ii} = \begin{bmatrix} Y_{\Delta x} \\ Y_{\Delta y} \end{bmatrix} \tag{55}$$

$$= \begin{bmatrix} \cos(2\theta_i) & \sin(2\theta_i) \\ -\sin(2\theta_i) & \cos(2\theta_i) \end{bmatrix} y_\Delta^s \tag{56}$$

$$\theta_i = atan2(i_\alpha, i_\beta) = \angle i_s^s \tag{57}$$

Diese lässt sich beispielsweise im Rahmen dieser Sättigungsannahme vereinfacht berechnen, indem $f_s(\cdot)$ aus (49) für Stromwinkel $\theta_i = 0$, d.h. $i_\beta = 0$ und $\theta_r \approx -\frac{\pi}{2}$ ausgewertet wird

$$y_{\Delta 0}^{ii}(i_q) = f_s\left(-\frac{\pi}{2}, \begin{bmatrix} i_q \\ 0 \end{bmatrix}\right) \tag{58}$$

$$m_\Delta^{ii}(i_q) = \frac{f_s\left(-\frac{\pi}{2}+\frac{h}{2}, \begin{bmatrix} i_q \\ 0 \end{bmatrix}\right) - f_s\left(-\frac{\pi}{2}-\frac{h}{2}, \begin{bmatrix} i_q \\ 0 \end{bmatrix}\right)}{h}. \tag{59}$$

Aus (51) und (52) bzw. (58) und (59) kann nun eine beispielhafte lineare Lagezuordnungsvorschrift abgeleitet werden

$$k_x = \frac{m_x}{m_x^2 + m_y^2} \tag{60}$$

$$k_x = \frac{m_y}{m_x^2 + m_y^2} \tag{61}$$

$$k_0 = -\frac{m_x Y_{0x} + m_y Y_{0y}}{m_x^2 + m_y^2} - \theta_i \tag{62}$$

$$\hat{\theta}_r = k_x \tilde{Y}_{\Delta x} + k_y \tilde{Y}_{\Delta y} + k_0 + \theta_i , \tag{63}$$

worin (60)-(62) im Voraus berechnet werden können und es genügt, lediglich (63) im Betrieb zu abzuarbeiten. Dabei sind die Koeffizienten $k_x$, $k_y$ und $k_0$ hinterlegte Modellparameter und $\tilde{Y}_{\Delta x}$, $\tilde{Y}_{\Delta y}$ und $\theta_i$ das aktuelle Ergebnis der Strommessung und Anisotropie-Identifikation im Betrieb.

In manchen Ausführungsformen werden die Lagezuordnungskoeffizienten $k_x$, $k_y$ und $k_0$ nur einmal nach der initialen Ermittlung der Induktivitäten $L_{dd0}$, $L_{qq0}$ und des PM-Flusswerts $\psi_{pm}$ (bzw. des Kurzschlussstroms $i_{pm}$) für mehrere q-Stromwerte mittels (58)-(62), (48) und (25) berechnet und als Tabelle über dem Strom abgelegt. Dann genügt es, im Betrieb die zum aktuellen Stromwert passenden Koeffizienten $k_\times(i_\parallel)$ zu wählen/interpolieren und mittels (63) die Rotorlage zuzuordnen.

### 3.3.2 Suchansatz

In manchen Ausführungsformen wird dem Anisotropiemodell (beispielsweise $y_\Delta^s(\theta_r, i_s^s)$ bzw. $y_\Delta^{ii}(\theta_r, i_s^s)$) der gemessene Strom und ein variabler Rotorlage-Schätzwert ($\hat{\theta}_r$) zugeführt, wobei dieser Schätzwert so variiert wird, dass das Modell bestmöglich mit dem aktuellen Anisotropiemesswert (beispielsweise $\tilde{y}_\Delta^s$ bzw. $\tilde{y}_\Delta^{ii}$) übereinstimmt.

Dafür kann zur Lagezuordnung im Betrieb beispielsweise der Punkt der SFC Modelltrajektorie $y_\Delta^{ii}(i_\parallel)$ gesucht werden, der dem Messwert $\tilde{y}_\Delta^{ii}$ naheliegt und der zugehörige Lagewert als Schätzwert verwendet werden. Beispielsweise wird in Anlehnung an (58) das auf (48) basierende Modell $f_s(\cdot)$ nun mit variablem Rotorlagewert $\theta_r$ betrachtet

$$y_{\Delta M}^{ii}(\theta_r) = f_s\left(\theta_r - \theta_i, \begin{bmatrix} i_\parallel \\ 0 \end{bmatrix}\right), \tag{64}$$

wobei $\theta_i$ und $i_\parallel$ im Betrieb Messwerte sind und $\theta_r$ so variiert wird, dass das Modell bestmöglich mit dem aktuellen Messwert $\tilde{y}_\Delta^{ii}$ übereinstimmt. In manchen Ausführungsformen entspricht das Variieren zur bestmöglichen Übereinstimmung einer Minimierung des Abstandes zwischen Modellwert und Messwert

$$\min_{\hat{\theta}_r}\left|\tilde{y}_\Delta^{ii} - y_{\Delta M}^{ii}(\hat{\theta}_r)\right|^2. \tag{65}$$

Anschließend kann die gefundene Extremstelle als Schätzwert $\hat{\theta}_r$ übernommen werden. Zur Minimierung kann beispielsweise ein Gradientenabstiegsverfahren genutzt werden

$$\frac{d\hat{\theta}_r}{dt} = -k_f \frac{\left|\tilde{y}_\Delta^{ii} - y_{\Delta M}^{ii}\left(\hat{\theta}_r + \frac{h}{2}\right)\right|^2 - \left|\tilde{y}_\Delta^{ii} - y_{\Delta M}^{ii}\left(\hat{\theta}_r - \frac{h}{2}\right)\right|^2}{h}, \tag{66}$$

worin der Vorfaktor $k_f$ beispielsweise abhängig von der Lageabhängigkeit $\frac{\partial y_{\Delta M}^{ii}}{\partial \theta_r}$, die Bandbreite der Nachführung von $\hat{\theta}_r$ skalieren kann.

### 4 Experimentelle Ergebnisse

Fig. 7a-f verifiziert die Sättigungsannahmen für die Grundwelleninduktivität und die Anisotropie-Verschiebung anhand dreier geometrisch isotroper (SPM) und dreier geometrisch anisotroper (IPM) Synchronmaschinen von 6 verschiedenen Herstellern mit unterschiedlichen Werten für Nennleistung und Anisotropie-Verhältnis (SR). Die vertikalen gepunkteten Linien, welche Nennlast markieren, setzen den dargestellten Überlastbereich und den Punkt mit Kurz-schlussstrom ($i_q/i_{pm}$ = 1) in Relation.

Die durch die Grundwelleninduktivität verursachten Schätzfehler sind bei allen Maschinen unter Verwendung der Sättigungsannahme deutlich verringert gegenüber dem Betrieb mit Vernachlässigung der Sättigung, d.h. mit konstantem Parameter $L_q$. Für alle SPMs überschreitet jener Schätzfehler in praxisrelevantem Rahmen von vierfacher Überlast eine Fehlerschwelle von 5° elektrisch nicht, während mit konstantem $L_q$ bis zu 20° Fehler entstehen. Bei IPMs sind jene Schätzfehler größer (im dargestellten Lastbereich <10° elektrisch) als bei SPMs, aber dennoch deutlich geringer, als bei Betrieb mit konstantem $L_q$. Deshalb kann eine Verwendung der Sättigungsannahme der Grundwelleninduktivität auch bei geometrisch anisotropen Maschinen sinnvoll sein.

Die durch die Anisotropie-Verschiebung verursachten Schätzfehler sind bei geometrisch isotropen Maschinen

# EP 3 871 331 B1

unter Verwendung der Sättigungsannahme deutlich verringert gegenüber dem Betrieb ohne Berücksichtigung der Sättigung, d.h. mit direkter Verwendung des Anisotropiewinkels als Rotorlagewert. Bei SPMs bleibt jener Schätzfehler mit Sättigungsannahme meist kleiner 7° elektrisch, während mit $\theta_{ar} = 0$ bis zu 60° Fehler entstehen. Jedoch ist mit SPM1 auch ein schwierigerer Fall dargestellt, wo der Schätzfehler auch mit Sättigungsannahme auf bis zu 15° ansteigt. Bei IPMs hingegen sind jene Anisotropie-Schätzfehler nicht nur deutlich größer als bei SPMs, sondern auch häufig betragsmäßig größer, als bei direkter Verwendung des Anisotropiewinkels als Rotorlagewert. Deshalb ist eine Verwendung der Sättigungsannahme für die Anisotropie-Verschiebung bei geometrisch anisotropen Maschinen nicht sinnvoll.

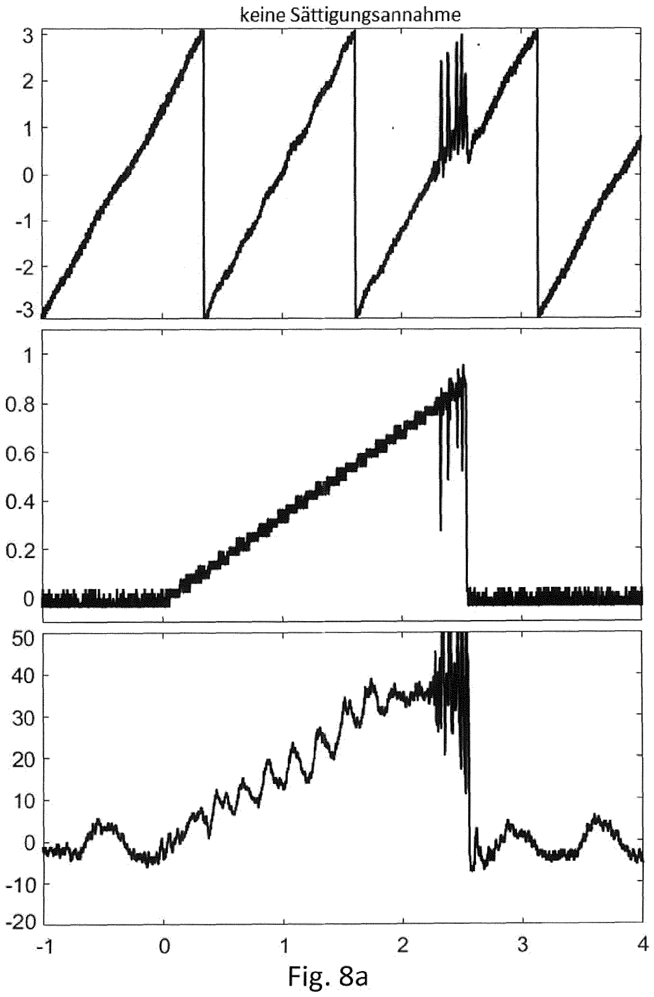

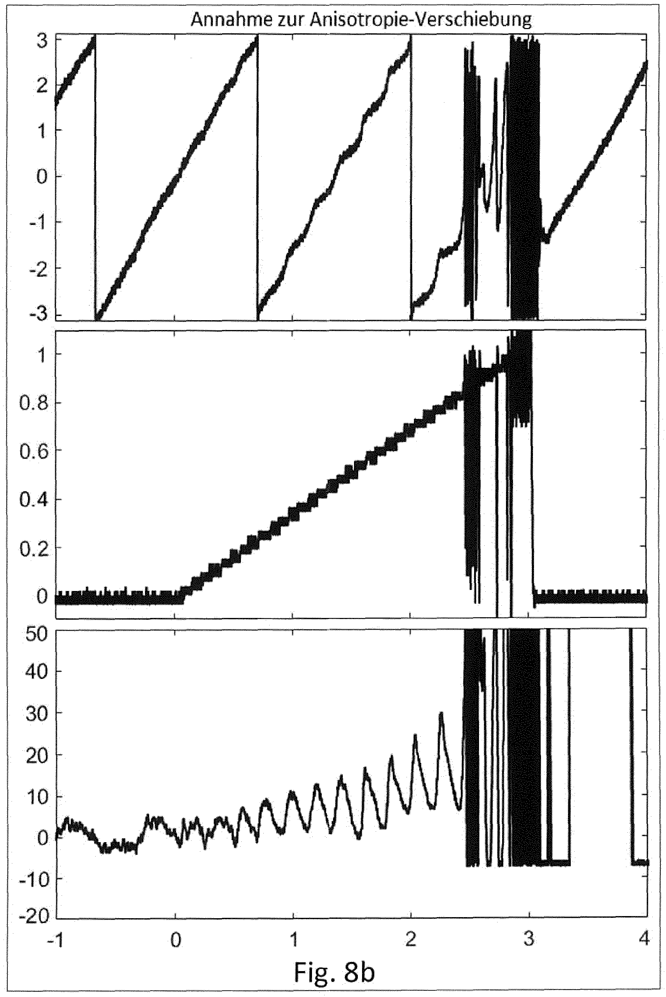

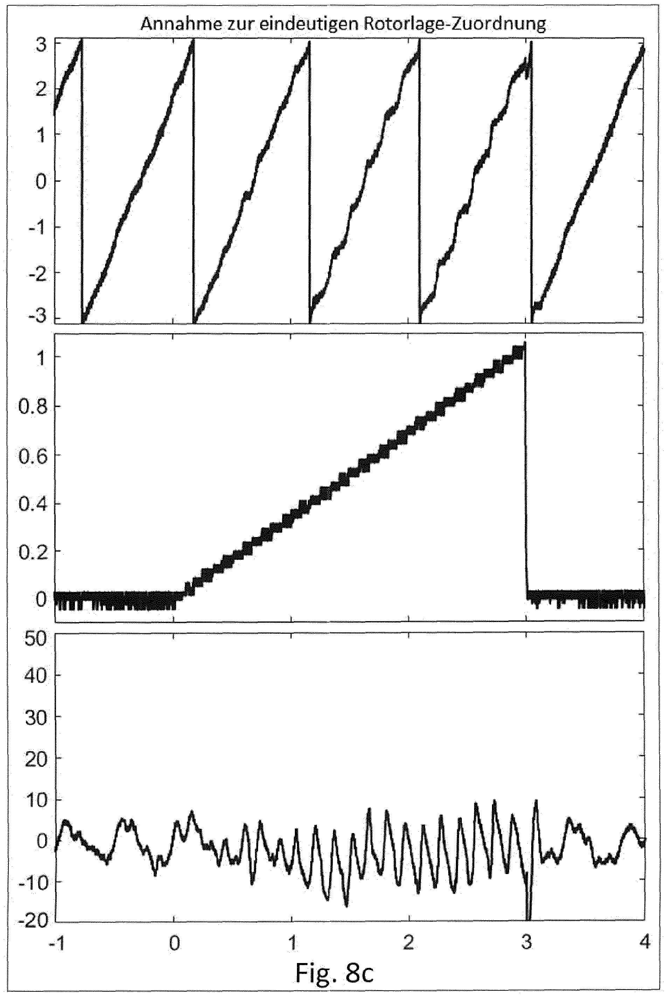

Fig. 8a-c vergleicht die experimentellen Ergebnisse aus dem geberlosen Betrieb mit der geometrisch isotropen Maschine SPM3 unter Parametrierung ohne Sättigungsannahme, mit Anisotropie-Verschiebungs-Annahme und mit Annahme zur eindeutigen Rotorlagezuordnung nach dem Ausführungsbeispiel in Abschnitt 3.3.1. In allen Fällen wurde SPM3 durch eine Lastmaschine langsam angetrieben und ihre Rotorlage ausschließlich Anisotropie-basiert geschätzt und zur Transformation der Feldorientierten Stromregelung verwendet. Der q-Sollstrom wurde ab $t = 0$ langsam erhöht, sodass er bei ca. 0.6s Nennstrom und bei ca. 3s den Kurzschlussstrom $i_{pm}$ erreicht ist. Ohne Sättigungsannahme (Fig. 8a) wächst der mittlere (Harmonische ausgeblendet) Schätzfehler schnell an, überschreitet bereits bei Nennstrom 10° und der Regelkreis wird vor Erreichen des Kurzschlussstroms instabil. Mit der vorgestellten Annahme zur Anisotropie-Verschiebung (Fig. 8b) überschreitet der mittlere Schätzfehler erst bei ca. dreifachem Nennstrom die 10° Schwelle und ist damit auch bei höheren Drehmomenten noch für eine effiziente Stromregelung nutzbar. Aber auch in diesem Fall wird der Regelkreis vor Erreichen des Kurzschlussstroms instabil, weil der Zusammenhang zwischen Anisotropiewinkel und Rotorlage uneindeutig [34] wird. Mit der vorgestellten Annahme zur eindeutigen Rotorlagezuordnung (Fig. 8c) bleibt der mittlere Schätzfehler im gesamten Lastbereich kleiner als 10° und ist damit ohne Drehmomentbeschränkung für eine effiziente Stromregelung nutzbar. Darüber hinaus wird der Regelkreis auch bei hohen Lasten nicht instabil, weil die in [34] beschriebenen Ursachen für diese Art der Zuordnung nicht gelten. In allen Fällen sind in der geschätzten Rotorlage und besonders im Schätzfehler jedoch zwei- und sechs-periodische Oberwellen zu sehen, welche durch eine statorfeste und eine negative vierte Anisotropie-Harmonische [32] hervorgerufen werden, die im vorgestellten Verfahren nicht berücksichtigt werden. Eine zusätzliche Berücksichtigung dieser oder weiterer Harmonischer ist aber auch bei keiner der vorgestellten Ausführungsformen ausgeschlossen.

Weitere Aspekte betreffen:

(i) Eine Vorrichtung zur Steuerung und Regelung einer Drehfeldmaschine, umfassend einen Stator und einen Rotor, mit einem mit einer Einrichtung zur Erfassung einer Anzahl von Phasenströmen und mit einem Controller zur Ansteuerung des PWM-Umrichters, der zur Durchführung des Verfahrens wie oben beschrieben eingerichtet und ausgebildet ist; und einen

(ii) Synchronmaschine, umfassend einen Stator und einen Rotor mit oder ohne Permanentmagnete, mit einer Vorrichtung zur Steuerung und/oder Regelung wie in Punkt (i) beschrieben.

## 5 Zusammenfassung

Die heute etablierte, hocheffiziente Ansteuerung von Elektromaschinen setzt voraus, dass der Rotorwinkel zu jedem Zeitpunkt bekannt ist, d.h. in der Regel gemessen wird. Ohne diese Kenntnis können nur deutlich ineffizientere Ansteuerverfahren eingesetzt werden. Die Messung erfolgt im Betrieb mittels eines Sensors, der an der Rotorwelle angebracht ist - der sogenannte Rotorlagegeber oder kurz Geber.

Geber bringen eine Reihe von Nachteilen mit sich, wie z.B. erhöhte Systemkosten, verringerte Robustheit, erhöhte Ausfallwahrscheinlichkeit und größerer Bauraumbedarf, die das große industrielle Interesse begründen, das Winkelsignal ohne Verwendung eines Gebers zu gewinnen und für die effiziente Regelung einzusetzen.

Verfahren, die dies ermöglichen, werden als "geberlose" oder "sensorlose" Regelung bezeichnet und teilen sich in 2 Klassen auf:

1. Grundwellenverfahren werten die unter Bewegung induzierte Spannung aus, liefern bei mittleren und hohen Drehzahlen sehr gute Signal-Eigenschaften, aber versagen im unteren Drehzahlbereich, insbesondere bei Stillstand.
2. Anisotropie-basierte Verfahren werten die Lageabhängigkeit der Induktivität der Maschine aus, wozu keine Drehzahl notwendig ist, aber weisen mehrere Probleme und Hürden auf, die erklären, warum viele Anwendungen bis heute einen Lagegeber (mit seinen Nachteilen) benötigen.

Beide Verfahrensklassen benötigen bestimmte magnetische Parameter der Maschine, um aus Spannung und Strom die Rotorlage berechnen zu können. Durch magnetische Sättigung hängen diese Parameter jedoch Bestromungszustand ab. Die Güte und Stabilität der Lageschätzung bei hohen Lasten hängt damit von der Genauigkeit der Kenntnis des Sättigungsverhaltens der Parameter ab.

Das Sättigungsverhalten kann für einen Maschinentyp entweder mit mittlerer Genauigkeit aus den Daten der computergestützten Maschinenkonstruktion abgeleitet, oder mit hoher Genauigkeit an einem Prüfstand mit Lagegeber und Lastmaschine experimentell ermittelt werden. Häufig sind aber beide Möglichkeiten nicht gegeben, wenn z.B. eine unbekannte Synchronmaschine an einen Umrichter angeschlossen wird und auf Basis kurzer Initialisierungstests möglichst gute Regelungsergebnisse erreichen soll. Weil diese Tests zudem häufig drehmomentfrei sein sollen, ist eine direkte Messung des Sättigungsverhaltens nicht immer möglich.

Die hier beschriebenen Ausführungsformen bringt bestimmte physikalische Eigenschaften einer Synchronmaschine so miteinander in Zusammenhang, dass Regeln abgeleitet werden können, um aus Messwerten, die im drehmomentfreien Zustand gewonnen wurden, auf das Sättigungsverhalten unter Last bis hin zu mehrfacher Überlast zu schlussfolgern. Dies ermöglicht es nun, auch unbekannte Synchronmaschinen nach einer kurzen, drehmomentfreien Initialisierungsmessung ohne Prüfstand (übliche Bedingung im Feld) im gesamten Drehzahl- und Lastbereich bis hin zu mehrfacher Überlast stabil und effizient ohne Lagegeber zu regeln.

## 6 Literaturverzeichnis

[1] R. Wu und G. R. Slemon, "A permanent magnet motor drive without a shaft sensor," IEEE Trans. on Industry Applications, pp. 1005-1011, Sept 1991.

[2] T. Furuhashi, S. Sangwongwanich und S. Okuma, "A position-and-velocity sensorless control for brushless DC motors using an adaptive sliding mode observer," IEEE Trans. on Industrial Electronics, pp. 89-95, 04 1992.

[3] J. Hu, C. Romenesko und A. L. Markunas, "haft sensorless angular position and velocity estimation for a dynamoelectric machine based on extended rotor flux". US Patent US10917018, 12 08 2004.

[4] Z. Q. Zhu, Y. Li, D. Howe, C. M. Bingham und D. Stone, "Influence of Machine Topology and Cross-Coupling Magnetic Saturation on Rotor Position Estimation Accuracy in Extended Back-EMF Based Sensorless PM Brushless AC Drives," in IEEE Industry Applications Annual Meeting, New Orleans, 2007.

[5] H. Nagura, Y. Iwaji, J. Nakatsugawa und N. Iwasaki, "Steuervorrichtung für Synchronmotoren". EP JP Patent EP2290806, 27 08 2009.

[6] M. Schrödl und R. Ensbacher, "Verfahren und schaltungsanordnungen zur bestimmung maschinenbezogener elektromagnetischer und mechanischer zustandsgrössen an über umrichter gespeisten elektrodydynamischen drehfeldmaschinen". US EP DE Patent WO1992019038A1, 08 04 1992.

[7] P. L. Jansen und R. D. Lorenz, "Transducerless position and velocity estimation in induction and salient ac machines," IEEE Trans. on Industrial Applications, vol. 31, p. 240-247, 1995.

[8] M. J. Corley und R. D. Lorenz, "Rotor position and velocity estimation for a salientpole permanent magnet synchronous machine at standstill and high speeds," IEEE Trans. on Industrial Applications, vol. 34, p. 784-789, 1998.

[9] K. Ide, "Magnetic pole position estimating method and control apparatus for synchronous motor". US JP CN Patent US6801011, 26 03 2001.

[10] N. Bianchi und S. Bolognani, "Influence of rotor geometry of an interior PM motor on sensorless control feasibility," in IEEE Conf. IAS Annual Meeting, 2005.

[11] T. Frenzke, "Impacts of cross-saturation on sensorless control of surface permanent magnet synchronous motors," in Conf. EPE, Dresden, 2005.

[12] P. Balazovic und R. Filka, "Motor controller for determining a position of a rotor of an AC motor, AC motor system, and method of determining a position of a rotor of an AC motor". US Patent US8217605, 10 11 2000.

[13] E. Yamada und Y. Kawabata, "Method of controlling operation of synchronous motor and motor control apparatus for the same". US JP Patent US5969496, 23 06 1997.

[14] S. Chai, B. Lee, J. Hong, S. Sul und S. Kim, "Design of IPMSM having high power density for position sensorless operation with high-frequency signal injection and the method of calculating inductance profile," in IEEE Conf. ICEMS, Beijing, 2011.

[15] A. Stirban, I. Boldea und G. Andreescu, "Motion-Sensorless Control of BLDC-PM Motor With Offline FEM-Information-Assisted Position and Speed Observer," IEEE Trans. on Industry Applications, pp. 1950-1958, 11 2012.

[16] S. Ebersberger und B. Piepenbreier, "Identification of differential inductances of permanent magnet synchronous machines using test current signal injection," in International Symposium on Power Electronics, Sorrento, 2012.

[17] H. Peter und I. Hahn, "Determination of differential inductances of permanent magnet synchronous machines for sensorless control," in IEEE Conf. IEMDC, Niagara Falls, 2011.

[18] S. Villwock und H. Zatocil, "Vorrichtung und Verfahren zur drehgeberlosen Identifikation elektrischer Ersatzschaltbildparameter eines Drehstrom-Synchronmotors". EP US CN Patent EP2421147, 16 08 2010.

[19] Z. Gao, L. A. Turner und R. S. Colby, "Methods and devices for estimation of induction motor inductance parameters". US CA Patent US8373379, 21 10 2010.

[20] J. Boecker und H. Lorenz, "Verfahren zur Messung richtungsabhängig gesättigter Streuinduktivitäten von Asynchronmotoren". DE Patent DE19836237, 05 08 1998.

[21] J. Liu, M. M. Harbaugh, T. A. Nondahl, P. B. Schmidt und S. Royak, "Method and apparatus for automatically identifying electrical parameters in a sensor-less PMSM". US Patent US8228013B2, 10 09 2008.

[22] P. Landsmann und R. Kennel, "Q-axis pulse based identification of the anisotropy displacement over load for surface mounted PMSM," in IEEE Conf. SLED/PRECEDE, Munich, 2013.

[23] S. Ichikawa, M. Tomita, S. Doki und S. Okuma, "Sensorless control of permanent-magnet synchronous motors using online parameter identification based on system identification theory," IEEE Trans. on Industrial Electronics, pp. 363-372, 04 2006.

[24] M. A. Hamida, J. De Leon, A. Glumineau und R. Boisliveau, "An Adaptive Interconnected Observer for Sensorless Control of PM Synchronous Motors With Online Parameter Identification," IEEE Trans. on Industrial Electronics, pp. 739-748, 02 2013.

[25] T. Boileau, T. Leboeuf, B. Nahid-Mobarakeh und F. Meibody-Tabar, "Online Identification of PMSM Parameters: Parameter Identifiability and Estimator Comparative Study," IEEE Trans. on Industry Applications, pp. 1944-1957, 07 2011.

[26] S. Bolognani, M. Zigliotto und K. Unterkofler, "On-line Parameter Commissioning in Sensorless PMSM Drives," in IEEE Conf. ISIE, Guimaraes, 1997.

[27] P. Landsmann, D. Paulus und R. Kennel, "Online identification of load angle compensation for anisotropy based sensorless control," in IEEE Conf. SLED, Birmingham, 2011.

[28] K. Wiedmann und A. Mertens, "Novel MRAS approach for online identification of key parameters for self-sensing control of PM synchronous machines," in IEEE Conf. EPE/PEMC, Novi Sad, 2012.

[29] M. Schrödl, "Detection of the rotor position of a permanent magnet synchronous machine at standstill," IEEE Conf. ICEM, p. 51-56, 1988.

[30] D. Paulus, P. Landsmann und R. Kennel, "Sensorless field- oriented control for permanent magnet synchronous machines with an arbitrary injection scheme and direct angle calculation," IEEE Conf. SLED, pp. 41-46, 2011.

[31] P. Landsmann, "Verfahren zur Identifikation der magnetischen Anisotropie einer elektrischen Drehfeldmaschine". DE, EP, WO Patent DE102015217986, 18 09 2015.

[32] P. L. S. K. a. R. K. D. Paulus, "Arbitrary injection for permanent magnet synchronous machines with multiple saliencies," in IEEE Conf. ECCE, Denver, 2013.

[33] P. Landsmann, D. Paulus und S. Kühl, "Verfahren und Vorrichtung zur Regelung einer Synchronmaschine ohne Lagegeber mittels eindeutiger Zuordnung der Admittanz oder Induktivität zur Rotorlage". DE Patent DExxxxxxxx, 22 08 2018.

[34] W. Hammel, P. Landsmann und R. M. Kennel, "Operating point dependent anisotropies and assessment for position-sensorless control," in EPE/ECCE Europe, Karlsruhe, 2016.

## Patentansprüche

1. Verfahren zur lastfreien Bestimmung lastabhängiger Lagezuordnungsparameter einer Synchronmaschine mit Permanentmagnet und ohne Lagegeber, welche über getaktete Klemmspannungen angesteuert wird, aus denen in Verbindung mit der gemessenen Stromantwort die Induktivität berechnet wird,

   **gekennzeichnet dadurch, dass**
   aus der lastfrei kleinsten und der lastfrei größten Induktivität ($L_{dd0}$, $L_{qq0}$) und einem Kurzschlussstrom ($i_{pm}$), der ein zur Erregung durch den Permanentmagneten äquivalenter Strombetrag ist, der Verlauf/die Verläufe der absoluten Induktivität ($L_q$) und/oder der magnetischen Anisotropie der Synchronmaschine unter Last in Abhängigkeit vom Strom im Bereich der magnetischen Sättigung vorhergesagt und im Lagegeber-losen Regelungsbetrieb als Lagezuordnungsparameter zur Lagezuordnung genutzt wird/werden.

2. Verfahren nach Anspruch 1,
   wobei der Verlauf der absoluten Induktivität und/oder der magnetischen Anisotropie der Synchronmaschine unter Last in Abhängigkeit vom Strom im Bereich der magnetischen Sättigung vorhergesagt und im Lagegeber-losen Regelungsbetrieb kompensiert wird.

3. Verfahren nach einem der vorhergehenden Ansprüche,
   wobei eine lastfreie Induktivität der Ableitung der Flussverkettung nach dem Strom im Betriebspunkt mit Null Strom entspricht.

4. Verfahren nach einem der vorhergehenden Ansprüche,
   wobei die kleinste und die größte Induktivität der richtungsanhängig kleinste und größte Induktivitätswert eines Betriebspunktes sind, wobei die Richtungsabhängigkeit der magnetischen Anisotropie entspricht.

5. Verfahren nach einem der vorhergehenden Ansprüche,
   wobei der Wert des Kurzschlussstroms dem Betrag des Statorstroms entspricht, der sich bei Nenndrehzahl mit Null Spannung einstellt.

6. Verfahren nach einem der vorhergehenden Ansprüche,
   wobei der Kurzschlussstrom als Quotient aus der Permanentmagnet-Flussverkettung geteilt durch eine Kombination der lastfrei kleinsten und der lastfrei größten Induktivität berechnet wird.

7. Verfahren nach Anspruch 6,
   wobei die Kombination einer Mittelwertbildung entspricht.

8. Verfahren nach einem der vorhergehenden Ansprüche,
   wobei dem Verfahren die Annahme unterliegt, dass die q-Achse, d.h. Richtung quer zum Permanentmagneten, das gleiche magnetische Verhalten annimmt, wie die d-Achse, d.h. Richtung des Permanentmagneten, im unbestromten Zustand, wenn in q-Richtung der Kurzschlussstrom eingeprägt wird.

9. Verfahren nach einem der vorhergehenden Ansprüche,
   wobei die absolute Induktivität ($L_q$) als Parameter zur Auswertung der induzierten Spannung so berechnet wird, dass sie ausgehend von ihrem bei Null Strom geltenden Wert, der lastfrei größten Induktivität, mit zunehmendem Strom so absinkt, dass sie bei Erreichen des Kurzschlussstroms dem Mittelwert der lastfrei kleinsten und der lastfrei größten Induktivität gleicht.

**10.** Verfahren nach einem der Ansprüche 1 bis 8,
wobei ein Sättigungsstromvektor durch vektorielle Addition eines Phasenstromvektors und eines Kurzschlussstromvektors berechnet wird, wobei der Kurzschlussstromvektor den Betrag des Kurzschlussstroms hat und in Richtung des Permanentmagneten ausgerichtet ist.

**11.** Verfahren nach Anspruch 10,
wobei die Anisotropieverschiebung ($\theta_{ar}$) als Parameter zur Auswertung der magnetischen Anisotropie so berechnet wird, dass sie mit zunehmendem Phasenstrom so anwächst, dass die damit angenommene Ausrichtung der Anisotropie der Richtung des Sättigungsstromvektors entspricht.

**12.** Verfahren nach einem der Ansprüche 10 oder 11,
wobei der Anisotropiebetrag ($Y_\Delta$) als Parameter zur eindeutigen Anisotropie-Rotorlagezuordnung so berechnet wird, dass er ausgehend von seinem bei Nullstrom wirksamen Wert $Y_{\Delta 0}$ über dem Sättigungsstrombetrag progressiv anwächst.

**13.** Verfahren nach Anspruch 12,
wobei der bei Nullstrom wirksame Wert des Anisotropiebetrags ($Y_{\Delta 0}$) aus der lastfrei kleinsten und der lastfrei größten Induktivität ermittelt wird.

**14.** Verfahren nach Anspruch 12 oder 13,
wobei das progressive Anwachsen einem Anwachsen proportional zur dritten Potenz des Sättigungsstrombetrags entspricht.

**15.** Verfahren nach einem der Ansprüche 11 bis 14,
wobei ein Modell-Anisotropievektor konstruiert wird, der die Länge des Anisotropiebetrags hat und im zweifachen Anisotropiewinkel ausgerichtet ist, wobei der Anisotropiewinkel der Summe aus Rotorlage und Anisotropieverschiebung entspricht, sodass der Modell-Anisotropievektor als Funktion von Phasenstromvektor und Rotorlage beschrieben ist.

**16.** Verfahren nach Anspruch 15,
wobei die Lageabhängigkeit des Modell-Anisotropievektors für verschiedene statorfeste Stromwerte im Sollstrom-Arbeitspunkt linearisiert wird und eine lineare Lagezuordnungsvorschrift verwendet wird, die einer Projektion des gemessenen Anisotropievektors auf die für den gemessenen Strom geltende Linearisierung entspricht.

**17.** Verfahren nach Anspruch 15,
wobei dem Anisotropiemodell der gemessene Strom und ein variabler Rotorlage-Schätzwert zugeführt wird, wobei dieser Schätzwert so variiert wird, dass das Modell bestmöglich mit einem aktuellen Anisotropiemesswert übereinstimmt.

**18.** Verfahren nach Anspruch 17,
wobei das Variieren zur bestmöglichen Übereinstimmung einer Minimierung des Abstandes zwischen Modellwert und Messwert entspricht.

**19.** Verfahren nach einem der Ansprüche 10 bis 18,
wobei eine Kompensation und/oder Nutzung zur Lagezuordnung der Anisotropie-Sättigungsberechnungen nur dann stattfindet, wenn die Differenz zwischen der lastfrei größten und der lastfrei kleinsten Induktivität weniger als 20% ihrer Summe beträgt.

**20.** Vorrichtung zur Steuerung und Regelung einer Drehfeldmaschine, umfassend einen Stator und einen Rotor, mit einem steuerbaren PWM-Umrichter zur Ausgabe von getakteten Klemmspannungen, mit einer Einrichtung zur Erfassung einer Anzahl von Phasenströmen und mit einem Controller zur Ansteuerung des PWM-Umrichters, der zur Durchführung des Verfahrens nach einem der vorhergehenden Ansprüche eingerichtet und ausgebildet ist.

**21.** Synchronmaschine, umfassend einen Stator und einen Rotor mit oder ohne Permanentmagnete, mit einer Vorrichtung zur Steuerung und/oder Regelung nach Anspruch 20.

**EP 3 871 331 B1**

**Claims**

1. Method for the no-load determination of load-dependent position assignment parameters of a synchronous machine with a permanent magnet and without a position sensor, which is controlled via clocked terminal voltages, from which the inductance is calculated in conjunction with the measured current response, **characterized in that** from the smallest no-load inductance and the largest no-load inductance ($L_{dd0}$, $L_{qq0}$) and a short-circuit current ($i_{pm}$) which is an equivalent current amount for excitation by the permanent magnet, the curve(s) of the absolute inductance ($L_q$) and/or the magnetic anisotropy of the synchronous machine under load as a function of the current in the magnetic saturation range and is/are used as position assignment parameters for position assignment in position sensor-less control operation.

2. Method according to claim 1, wherein the course of the absolute inductance and/or the magnetic anisotropy of the synchronous machine under load is predicted as a function of the current in the magnetic saturation range and compensated for in position sensor-free control operation.

3. Method according to one of the preceding claims, wherein a no-load inductance of the derivation of the flux linkage corresponds to zero current at the operating point.

4. Method according to one of the preceding claims, wherein the smallest and largest inductance values are the direction-dependent smallest and largest inductance values of an operating point, wherein the direction dependence corresponds to the magnetic anisotropy.

5. Method according to one of the preceding claims, wherein the value of the short-circuit current corresponds to the amount of the stator current that is set at zero voltage at rated speed.

6. Method according to one of the preceding claims, wherein the short-circuit current is calculated as the quotient of the permanent magnet flux linkage divided by a combination of the smallest no-load inductance and the largest no-load inductance.

7. Method according to claim 6, wherein the combination corresponds to averaging.

8. Method according to one of the preceding claims, wherein the method is subject to the assumption that the q-axis, i.e., the direction transverse to the permanent magnet, assumes the same magnetic behavior as the d-axis, i.e., the direction of the permanent magnet, in the de-energized state when the short-circuit current is applied in the q-direction.

9. Method according to one of the preceding claims, wherein the absolute inductance ($L_q$) is calculated as a parameter for evaluating the induced voltage in such a way that, starting from its value at zero current, the maximum no-load inductance, it decreases with increasing current so that, when the short-circuit current is reached, it equals the mean value of the minimum no-load inductance and the maximum no-load inductance.

10. Method according to one of claims 1 to 8, wherein a saturation current vector is calculated by vectorial addition of a phase current vector and a short-circuit current vector, wherein the short-circuit current vector has the magnitude of the short-circuit current and is aligned in the direction of the permanent magnet.

11. Method according to claim 10, wherein the anisotropy shift ($\theta_{ar}$) is calculated as a parameter for evaluating the magnetic anisotropy in such a way that it increases with increasing phase current so that the assumed alignment of the anisotropy corresponds to the direction of the saturation current vector.

12. Method according to one of claims 10 or 11, wherein the anisotropy amount ($Y_\Delta$) is calculated as a parameter for unambiguous anisotropy-rotor position assignment in such a way that it increases progressively from its effective value $Y_{\Delta0}$ at zero current above the saturation current amount.

13. Method according to claim 12, wherein the effective value of the anisotropy amount ($Y_{\Delta0}$) at zero current is determined from the smallest no-load inductance and the largest no-load inductance.

14. Method according to claim 12 or 13, wherein the progressive increase corresponds to an increase proportional to the cube of the saturation current amount.

15. Method according to one of claims 11 to 14, wherein a model anisotropy vector is constructed which has the length of the anisotropy magnitude and is oriented at twice the anisotropy angle, wherein the anisotropy angle corresponds to the sum of the rotor position and the anisotropy shift, so that the model anisotropy vector is described as a function of the phase current vector and the rotor position.

16. Method according to claim 15, wherein the positional dependence of the model anisotropy vector is linearized for different stator-fixed current values at the target current operating point, and a linear position assignment rule is used which corresponds to a projection of the measured anisotropy vector onto the linearization applicable to the measured current.

17. Method according to claim 15, wherein the measured current and a variable rotor position estimate are fed into the anisotropy model, wherein this estimate is varied such that the model corresponds as closely as possible to a current anisotropy measurement value.

18. Method according to claim 17, wherein the variation corresponds to the best possible match of a minimization of the difference between the model value and the measured value.

19. Method according to one of claims 10 to 18, wherein compensation and/or utilization for position assignment of the anisotropy saturation calculations only takes place if the difference between the no-load maximum and no-load minimum inductance is less than 20% of their sum.

20. Device for controlling and regulating a rotating field machine, comprising a stator and a rotor, with a controllable PWM converter for outputting clocked terminal voltages, with a device for detecting a number of phase currents, and with a controller for controlling the PWM converter, which is set up and designed to carry out the method according to one of the preceding claims.

21. Synchronous machine comprising a stator and a rotor with or without permanent magnets, with a device for control and/or regulation according to claim 20.

## Revendications

1. Procédé pour déterminer sans charge les paramètres d'affectation de position dépendants de la charge d'une machine synchrone à aimant permanent et sans capteur de position, qui est commandée par des tensions de bornes cadencées à partir desquelles l'inductance est calculée en liaison avec la réponse de courant mesurée, **caractérisé en ce que** à partir de l'inductance minimale sans charge et de l'inductance maximale sans charge ($L_{dd0}$,, $L_{qq0}$) et d'un courant de court-circuit ($i_{pm}$) qui est une valeur de courant équivalente à l'excitation par l'aimant permanent, la courbe/les courbes de l'inductance absolue ($L_q$) et/ou de l'anisotropie magnétique de la machine synchrone sous charge en fonction du courant dans la plage de saturation magnétique et est/sont utilisé(s) comme paramètre(s) d'attribution de position pour l'attribution de position en mode de régulation sans capteur de position.

2. Procédé selon la revendication 1, dans lequel l'évolution de l'inductance absolue et/ou de l'anisotropie magnétique de la machine synchrone sous charge est prédite en fonction du courant dans la zone de saturation magnétique et compensée en mode de régulation sans capteur de position.

3. Procédé selon l'une des revendications précédentes, dans lequel une inductance sans charge de la dérivation de la chaîne de flux correspond au flux au point de fonctionnement avec un courant nul.

4. Procédé selon l'une des revendications précédentes, dans lequel l'inductance minimale et l'inductance maximale sont les valeurs d'inductance minimale et maximale dépendantes de la direction d'un point de fonctionnement, la dépendance à la direction correspondant à l'anisotropie magnétique.

5. Procédé selon l'une des revendications précédentes, dans lequel la valeur du courant de court-circuit correspond à la valeur du courant statorique qui s'établit à la vitesse nominale avec une tension nulle.

6. Procédé selon l'une des revendications précédentes, dans lequel le courant de court-circuit est calculé comme le quotient du flux magnétique permanent divisé par une combinaison de la plus petite inductance sans charge et de la plus grande inductance sans charge.

**7.** Procédé selon la revendication 6, dans lequel la combinaison correspond à un calcul de moyenne.

**8.** Procédé selon l'une des revendications précédentes, le procédé étant soumis à l'hypothèse que l'axe q, c'est-à-dire la direction transversale à l'aimant permanent, adopte le même comportement magnétique que l'axe d, c'est-à-dire la direction de l'aimant permanent, à l'état non alimenté, lorsque le courant de court-circuit est appliqué dans la direction q.

**9.** Procédé selon l'une des revendications précédentes, dans lequel l'inductance absolue ($L_q$) est calculée comme paramètre pour évaluer la tension induite de telle sorte qu'à partir de sa valeur applicable à un courant nul, l'inductance maximale sans charge, elle diminue avec l'augmentation du courant de manière à être égale à la valeur moyenne de l'inductance minimale sans charge et de l'inductance maximale sans charge lorsque le courant de court-circuit.

**10.** Procédé selon l'une des revendications 1 à 8, dans lequel un vecteur de courant de saturation est calculé par addition vectorielle d'un vecteur de courant de phase et d'un vecteur de courant de court-circuit, le vecteur de courant de court-circuit ayant la valeur du courant de court-circuit et étant orienté dans la direction de l'aimant permanent.

**11.** Procédé selon la revendication 10, dans lequel le décalage d'anisotropie ($\theta_{ar}$) en tant que paramètre pour l'évaluation de l'anisotropie magnétique est calculé de telle sorte qu'il augmente avec l'augmentation du courant de phase, de telle sorte que l'orientation supposée de l'anisotropie corresponde à la direction du vecteur de courant de saturation.

**12.** Procédé selon l'une des revendications 10 ou 11, dans lequel le degré d'anisotropie ($Y_\Delta$) est calculé comme paramètre pour l'attribution univoque de la position du rotor à l'anisotropie de telle sorte qu'il augmente progressivement à partir de sa valeur effective $Y_{\Delta 0}$ à courant nul au-dessus du courant de saturation.

**13.** Procédé selon la revendication 12, dans lequel la valeur effective de la quantité d'anisotropie ($Y_{\Delta 0}$) à courant nul est déterminée à partir de la plus petite inductance sans charge et de la plus grande inductance sans charge.

**14.** Procédé selon la revendication 12 ou 13, dans lequel l'augmentation progressive correspond à une augmentation proportionnelle à la troisième puissance de la valeur du courant de saturation.

**15.** Procédé selon l'une des revendications 11 à 14, dans lequel un vecteur d'anisotropie modèle est construit, qui a la longueur de la valeur d'anisotropie et est orienté selon le double angle d'anisotropie, l'angle d'anisotropie correspondant à la somme de la position du rotor et du décalage d'anisotropie, de sorte que le vecteur d'anisotropie modèle est décrit en fonction du vecteur de courant de phase et de la position du rotor.

**16.** Procédé selon la revendication 15, dans lequel la dépendance de la position du vecteur d'anisotropie du modèle est linéarisée pour différentes valeurs de courant fixes du stator au point de fonctionnement du courant de consigne et une règle d'attribution de position linéaire est utilisée, qui correspond à une projection du vecteur d'anisotropie mesuré sur la linéarisation applicable au courant mesuré.

**17.** Procédé selon la revendication 15, dans lequel le courant mesuré et une valeur estimée variable de la position du rotor sont fournis au modèle d'anisotropie, cette valeur estimée étant modifiée de telle sorte que le modèle corresponde au mieux à une valeur de mesure d'anisotropie actuelle.

**18.** Procédé selon la revendication 17, la variation correspondant à la meilleure correspondance possible entre une minimisation de la distance entre la valeur modélisée et la valeur mesurée.

**19.** Procédé selon l'une des revendications 10 à 18, dans lequel une compensation et/ou une utilisation pour l'attribution de position des calculs de saturation d'anisotropie n'a lieu que si la différence entre l'inductance maximale sans charge et l'inductance minimale sans charge est inférieure à 20 % de leur somme.

**20.** Dispositif pour commander et réguler une machine à champ tournant, comprenant un stator et un rotor, avec un convertisseur PWM commandable pour délivrer des tensions de borne cadencées, avec un dispositif pour détecter un certain nombre de courants de phase et avec un contrôleur pour commander le convertisseur PWM, qui est conçu et réalisé pour mettre en œuvre le procédé selon l'une des revendications précédentes.

**21.** Machine synchrone comprenant un stator et un rotor avec ou sans aimants permanents, avec un dispositif de commande et/ou de régulation selon la revendication 20.

Fig. 1

Fig. 2

Fig. 3

Fig. 4

Fig. 5

Fig. 6

## SPM1 (1kW, 7%SR)

Fig. 7a

SPM2 (1.5kW, 12%SR)

Fig. 7b

## SPM3 (0.75kW, 18%SR)

Fig. 7c

IPM1 (3.1kW, 33%SR)

Fig. 7d

## IPM2 (3.1kW, 38%SR)

Fig. 7e

**IPM3 (1kW, 50%SR)**

Fig. 7f

keine Sättigungsannahme

Fig. 8a

Annahme zur Anisotropie-Verschiebung

Fig. 8b

Annahme zur eindeutigen Rotorlage-Zuordnung

Fig. 8c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10917018 B, J. Hu, C. Romenesko und A. L. Markunas
- US 12082004 B
- EP 2290806 A, H. Nagura, Y. Iwaji, J. Nakatsugawa und N. Iwasaki
- WO 1992019038 A1, M. Schrödl und R. Ensbacher
- US 6801011 B, K. Ide
- US 8217605 B, P. Balazovic und R. Filka
- US 5969496 A, E. Yamada und Y. Kawabata

- EP 2421147 A, S. Villwock und H. Zatocil
- US 8373379 B, Z. Gao, L. A. Turner und R. S. Colby
- DE 19836237, J. Boecker und H. Lorenz
- US 8228013 B2, J. Liu, M. M. Harbaugh, T. A. Nondahl, P. B. Schmidt und S. Royak
- DE 102015217986, P. Landsmann
- DE XXXXXXXX, P. Landsmann, D. Paulus und S. Kühl


**In der Beschreibung aufgeführte Nicht-Patentliteratur**

- **CHEN LEI et al.** Impact of bridge-saturation on anisotropy-based initial rotor polarity detection of interior permanent-magnet synchronous machines. *2016 19th International Conference on Electrical Machines and Systems (ICEMS), The Institute of Electrical Engineers of Japan*, 13 November 2016, 1-6
- **R. WU** ; **G. R. SLEMON**. A permanent magnet motor drive without a shaft sensor. *IEEE Trans. on Industry Applications*, September 1991, 1005-1011
- **T. FURUHASHI** ; **S. SANGWONGWANICH** ; **S. OKUMA**. A position-and-velocity sensorless control for brushless DC motors using an adaptive sliding mode observer. *IEEE Trans. on Industrial Electronics*, 1992, vol. 04, 89-95
- **Z. Q. ZHU** ; **Y. LI** ; **D. HOWE** ; **C. M. BINGHAM** ; **D. STONE**. Influence of Machine Topology and Cross-Coupling Magnetic Saturation on Rotor Position Estimation Accuracy in Extended Back-EMF Based Sensorless PM Brushless AC Drives. *IEEE Industry Applications Annual Meeting, New Orleans*, 2007
- **P. L. JANSEN** ; **R. D. LORENZ**. Transducerless position and velocity estimation in induction and salient ac machines. *IEEE Trans. on Industrial Applications*, 1995, vol. 31, 240-247
- **M. J. CORLEY** ; **R. D. LORENZ**. Rotor position and velocity estimation for a salientpole permanent magnet synchronous machine at standstill and high speeds. *IEEE Trans. on Industrial Applications*, 1998, vol. 34, 784-789
- **N. BIANCHI** ; **S. BOLOGNANI**. Influence of rotor geometry of an interior PM motor on sensorless control feasibility. *in IEEE Conf. IAS Annual Meeting*, 2005

- **T. FRENZKE**. Impacts of cross-saturation on sensorless control of surface permanent magnet synchronous motors. *in Conf. EPE, Dresden*, 2005
- **S. CHAI** ; **B. LEE** ; **J. HONG** ; **S. SUL** ; **S. KIM**. Design of IPMSM having high power density for position sensorless operation with high-frequency signal injection and the method of calculating inductance profile. *IEEE Conf. ICEMS, Beijing*, 2011
- **A. STIRBAN** ; **I. BOLDEA** ; **G. ANDREESCU**. Motion-Sensorless Control of BLDC-PM Motor With Offline FEM-Information-Assisted Position and Speed Observer. *IEEE Trans. on Industry Applications*, 2012, vol. 11, 1950-1958
- **S. EBERSBERGER** ; **B. PIEPENBREIER**. Identification of differential inductances of permanent magnet synchronous machines using test current signal injection. *International Symposium on Power Electronics, Sorrento*, 2012
- **H. PETER** ; **I. HAHN**. Determination of differential inductances of permanent magnet synchronous machines for sensorless control. *IEEE Conf. IEMDC, Niagara Falls*, 2011
- **P. LANDSMANN** ; **R. KENNEL**. Q-axis pulse based identification of the anisotropy displacement over load for surface mounted PMSM. *IEEE Conf. SLED/-PRECEDE, Munich*, 2013
- **S. ICHIKAWA** ; **M. TOMITA** ; **S. DOKI** ; **S. OKUMA**. Sensorless control of permanent-magnet synchronous motors using online parameter identification based on system identification theory. *IEEE Trans. on Industrial Electronics*, 2006, vol. 04, 363-372

- **M. A. HAMIDA** ; **J. DE LEON** ; **A. GLUMINEAU** ; **R. BOISLIVEAU**. An Adaptive Interconnected Observer for Sensorless Control of PM Synchronous Motors With Online Parameter Identification. *IEEE Trans. on Industrial Electronics*, February 2013, 739-748
- **T. BOILEAU** ; **T. LEBOEUF** ; **B. NAHID-MOBARA-KEH** ; **F. MEIBODY-TABAR**. Online Identification of PMSM Parameters: Parameter Identifiability and Estimator Comparative Study. *IEEE Trans. on Industry Applications*, July 2011, 1944-1957
- **S. BOLOGNANI** ; **M. ZIGLIOTTO** ; **K. UNTER-KOFLER**. On-line Parameter Commissioning in Sensorless PMSM Drives. *IEEE Conf. ISIE*, 1997
- **P. LANDSMANN** ; **D. PAULUS** ; **R. KENNEL**. Online identification of load angle compensation for anisotropy based sensorless control. *IEEE Conf. SLED, Birmingham*, 2011
- **K. WIEDMANN** ; **A. MERTENS**. Novel MRAS approach for online identification of key parameters for self-sensing control of PM synchronous machines. *IEEE Conf. EPE/PEMC, Novi Sad*, 2012
- **M. SCHRÖDL**. Detection of the rotor position of a permanent magnet synchronous machine at standstill. *IEEE Conf. ICEM*, 1988, 51-56
- **D. PAULUS** ; **P. LANDSMANN** ; **R. KENNEL**. Sensorless field- oriented control for permanent magnet synchronous machines with an arbitrary injection scheme and direct angle calculation. *IEEE Conf. SLED*, 2011, 41-46
- **P. L. S. K. A. R. K. D. PAULUS**. Arbitrary injection for permanent magnet synchronous machines with multiple saliencies. *IEEE Conf. ECCE, Denver*, 2013
- **W. HAMMEL** ; **P. LANDSMANN** ; **R. M. KENNEL**. Operating point dependent anisotropies and assessment for position-sensorless control. *EPE/ECCE Europe, Karlsruhe*, 2016